# EUROPÄISCHE PATENTSCHRIFT

(11) **EP 2 777 858 B1**
(45) Veröffentlichungstag und Bekanntmachung des Hinweises auf die Patenterteilung: **11.10.2017**
(21) Anmeldenummer: 13159529.0
(22) Anmeldetag: 15.03.2013
(51) Int. Cl.: B23K 9/10

(54) **Erhitzen eines Schweißzusatzes für das Lichtbogenschweißen**
Heating of a welding filler for arc welding
Chauffage d'un matériau d'apport pour le soudage à l'arc

(43) Veröffentlichungstag der Anmeldung: 17.09.2014
(73) Patentinhaber: EWM AG, 56271 Mündersbach (DE)
(72) Erfinder: Szczesny, Michael, 56271 Mündersbach (DE)
(74) Vertreter: Cohausz & Florack

(56) Entgegenhaltungen:
- EP-A2- 0 247 628
- WO-A1-97/40955
- JP-A- S6 199 582
- US-A1- 2013 043 219

## Beschreibung

Die Erfindung betrifft einen Schweißbrenner, der eine erste Schweißzusatzzuführung für einen ersten Schweißzusatz und eine zweite Schweißzusatzzuführung für einen zweiten Schweißzusatz und eine Schweißelektrode umfasst, wobei der erste Schweißzusatz durch eine dem Schweißbrenner zugeordnete Heizvorrichtung mit einem ersten Wechselstrom beaufschlagbar ist und wobei der zweite Schweißzusatz durch eine dem Schweißbrenner zugeordnete Heizvorrichtung mit einem zweiten Wechselstrom beaufschlagbar ist.

Weiterhin betrifft die Erfindung ein Lichtbogenschweißgerät mit einem derartigen Schweißbrenner.

Zudem betrifft die Erfindung die Verwendung eines solchen Schweißbrenners oder eines solchen Lichtbogenschweißgeräts für das Auftragsschweißen oder das Engspaltschweißen.

Schließlich betrifft die Erfindung ein Verfahren umfassend das Lichtbogenschweißen mit einem solchen Schweißbrenner oder mit einem solchen Lichtbogenschweißgerät.

Der Einfachheit halber werden in dieser Beschreibung das Lichtbogenschweißen und das Lichtbogenlöten stets unter der Bezeichnung Lichtbogenschweißen zusammengefasst. Entsprechend wird unter einem Lichtbogenschweißgerät auch ein Gerät zum Lichtbogenlöten verstanden.

Es ist bekannt, einen beim Lichtbogenschweißen verwendeten, Schweißzusatz, z.B. einen Schweißdraht, zusätzlich zu der Erhitzung, die er aufgrund des Schweißlichtbogens bzw. des von diesem erzeugten Schweißbads erfährt, zu erhitzen. Man spricht hierbei auch vom Heißdrahtschweißen. Dabei wird der Schweißzusatz von einer zusätzlichen Stromquelle durch Widerstandserwärmung im freien Drahtende zwischen Kontaktrohr des Heißdrahtbrenners und Schmelzbad aufgeheizt. Durch das Erhitzen des Schweißzusatzes kann die Abschmelzleistung des Schweißzusatzes erhöht werden, so dass es zu einer Produktivitätssteigerung kommen kann.

Es ist weiterhin bekannt, eine magnetische Beeinflussung des Schweißlichtbogens beim Lichtbogenschweißen durchzuführen. Durch die magnetische Beeinflussung kann eine Auslenkung des Lichtbogens erreicht werden. Gemäß einer bekannten Lösung wird zur magnetischen Beeinflussung des Lichtbogens der eingesetzte Schweißbrenner mit Spulen ausgerüstet. Diese verursachen, wenn sie von einem Strom durchflossen werden, die magnetische Beeinflussung des Lichtbogens. Werden die Spulen mit Wechselstrom versorgt, kommt es zu einer abwechselnden Auslenkung des Lichtbogens zu unterschiedlichen Seiten, d.h. zu einer pendelartigen Auslenkung. Die Oberflächen des Schweißbads vergrößert sich, so dass das Schweißbad bei gleicher Lichtbogenleistung flacher ist. Es kommt zu einer geringeren Aufmischung des Schweißzusatzmaterials mit dem Werkstückmaterial, was für verschiedene Schweißanwendungen wünschenswert ist.

Aus der JP S61 99582 A und der WO 97/40955 A1 ist jeweils ein WIG-Schweißverfahren bekannt, bei dem ein Fülldraht mit einem Wechselstrom beaufschlagt wird.

Als nachteilig an dieser Lösung kann betrachtet werden, dass die Spulen das Gewicht des Schweißbrenners erhöhen und eine Vergrößerung der Brennerabmessungen bewirken. Beides erschwert die Brennerhandhabung und kann daher auch die Schweißqualität beeinträchtigen. Vergrößerte Brennerabmessungen können das Lösen bestimmter Schweißaufgaben sogar unmöglich machen, z.B. beim Engspaltschweißen.
Es ist daher eine Aufgabe der vorliegenden Erfindung, einen Schweißbrenner, ein Lichtbogenschweißgerät und ein Verfahren anzugeben, die eine magnetische Beeinflussung des Lichtbogens beim Lichtbogenschweißen in verbesserter Weise erlauben.
Bei einem erfindungsgemäßen Schweißbrenner, wird diese Aufgabe durch die Merkmale des Anspruchs 1 gelöst.

Weiterhin wird die Aufgabe erfindungsgemäß durch ein Lichtbogenschweißgerät mit einem solchen Schweißbrenner gelöst sowie durch ein Verfahren, dass das Lichtbogenschweißen mit einem solchen Schweißbrenner oder einem solchen Lichtbogenschweißgerät umfasst.
Nachfolgend wird aus Gründen der Übersichtlichkeit die Erfindung mit einem Schwerpunkt auf der Heizvorrichtung erläutert. Die Erläuterungen gelten jedoch ausdrücklich analog bezüglich des erfindungsgemäßen Lichtbogenschweißgeräts und bezüglich des erfindungsgemäßen Verfahrens.

Dadurch, dass die Heizvorrichtung eingerichtet ist, den Schweißzusatz mit einem Wechselstrom zu beaufschlagen, ist der Schweißzusatz während des Schweißprozesses von einem magnetischen Wechselfeld umgeben. Der Schweißzusatz wird dem Schweißbad zugeführt und befindet sich somit in unmittelbarer Nähe zum Lichtbogen. Daher kann der Lichtbogen durch das magnetische Wechselfeld, das durch die Beaufschlagung des Schweißzusatzes mit einem Wechselstrom entsteht, beeinflusst werden. Es kann zu einer abwechselnden Auslenkung des Lichtbogens zu unterschiedlichen Seiten, d.h. zu einer pendelartigen Auslenkung, kommen. Die Oberflächen des Schweißbads vergrößert sich entsprechend, so dass das Schweißbad bei gleicher Lichtbogenleistung flacher ist. Es kommt zu einer geringeren Aufmischung des Schweißzusatzmaterials mit dem Werkstückmaterial, was für verschiedene Schweißanwendungen wünschenswert ist.

Erfindungsgemäß muss für das Erreichen dieser Effekte keine Spule vorgesehen werden, die für die Auslenkung des Lichtbogens sorgt. Stattdessen wird ein ohnehin vorhandener Schweißzusatz genutzt, um das für die pendelartige Auslenkung des Lichtbogens nötige magnetische Wechselfeld zu erzeugen. Der Schweißbrenner wird so nicht durch eine oder mehrere zusätzliche Spulen beschwert und seine Abmessungen, insbesondere der Durchmesser, nehmen nicht zu. Die Handhabbarkeit des Schweißbrenners kann also gegenüber solchen Schweißbrennern, die mit zusätzlichen Spulen ausgerüstet sind, verbessert sein. Seine Einsatzmöglichkeiten können erweitert sein. Da keine Spulen vorgesehen sein müssen und der Durchmesser des Schweißbrenners in der Nähe des Elektrodenaustritts geringer sein kann, kann der Schweißzusatz näher an der Elektrode und am Lichtbogen sowie in einem kleineren Winkel zu diesem in Richtung des Schweißbads geführt werden. Es kann eine Annährung an eine Parallelität von Lichtbogen und Schweißzusatz erreicht werden. Erleichterungen beim Schweißen können die Folge sein. Sind Lichtbogen und Schweißzusatz nahe beieinander und in kleinem Winkel zueinander geführt, kann ferner eine stärkere magnetische Beeinflussung des Lichtbogens gegeben sein.

Die Verwendung eines erfindungsgemäßen Schweißbrenners bzw. eines erfindungsgemäßen Lichtbogenschweißgeräts für das Auftragsschweißen kann besonders vorteilhaft sein. Um den gewünschten Auftrag schnell auf das jeweilige Werkstück aufbringen zu können, werden oftmals Heißdrahtdrahtschweißverfahren eingesetzt, mit denen ein besonders schnelles Abschmelzen des Schweißzusatzes erreicht werden kann. Hier kann in vorteilhafter Weise eine erfindungsgemäße Heizvorrichtung eingesetzt werden. Dann können eine magnetisch bewirkte, pendelartige Auslenkung des Lichtbogens und somit ein flacheres Schweißbad mit größerer Oberfläche und eine geringer Aufmischung des Werkstückmaterials erreicht werden. Die geringere Aufmischung des Schweißzusatzmaterials mit dem Werkstückmaterial kann dafür sorgen, dass der gewünschte Auftrag mit weniger Schweißzusatzmaterial erreicht werden kann, da sich das Schweißzusatzmaterial zu einem größeren Teil an der Werkstücksoberfläche anordnet. Bei gleicher Abschmelzleistung kann es somit zu einer erheblichen Produktivitätssteigerung kommen. Gerade wenn ein Produktivitätssteigerung durch Steigerung der dem Schweißzusatz zugeführten elektrischen Leistung nicht in Frage kommt, z.B. weil dann zwischen dem Schweißzusatz und dem Werkstück ein weiterer Lichtbogen gezündet würde, kann die erfindungsgemäße Lösung von besonderem Nutzen sein.

Die Verwendung eines erfindungsgemäßen Schweißbrenners bzw. eines erfindungsgemäßen Lichtbogenschweißgeräts für das Engspaltschweißen kann ebenfalls besonders vorteilhaft sein. Da für die magnetische Auslenkung des Lichtbogens keine Spule an dem verwendeten Schweißbrenner angeordneten sein muss, können die Abmessungen des Schweißbrenners das Einführen des Schweißbrenners in enge Spalte erlauben und so die Vorteile des Lichtbogenschweißens mit magnetisch bewirkter Lichtbogenauslenkung für das Engspaltschweißen nutzbar machen. So kann beispielsweise einerseits durch die magnetisch bewirkte Auslenkung des Lichtbogens im Vergleich zu Schweißen ohne Lichtbogenauslenkung in der gleichen Zeit ein Schweißbad mit größerer Oberfläche entstehen.
Andererseits können sogar Schweißbäder auf Werkstücksoberflächen auf unterschiedlichen Seiten des Spalts ausgebildet werden, wenn sich der Lichtbogen aufgrund des magnetischen Wechselfelds von der einen Werkstücksoberfläche zur anderen bewegt.

Der Begriff des Lichtbogenschweißens schließt im Kontext der Erfindung sämtliche Lichtbogenschweißverfahren ein. Dazu zählen einerseits die Lichtbogenschweißverfahren, die mit einer abschmelzenden Elektrode arbeiten. Zu diesen Lichtbogenschweißverfahren gehören insbesondere das Metallschutzgasschweißen (MSG-Schweißen). MSG-Schweißverfahren zeichnen sich dadurch aus, dass der Lichtbogen zwischen einer abschmelzenden Elektrode und dem in Bearbeitung befindlichen Werkstück brennt. Beim MSG-Schweißen kann die abschmelzende Elektrode durch einen Draht gebildet werden, dessen Vorschub automatisch durch eine Drahtfördervorrichtung erfolgt. Das Schutzgas bewirkt beim MSG-Schweißen die Abschirmung der abschmelzenden Elektrode, des Lichtbogens und des Schweißbads gegen die Atmosphäre. MSG-Schweißverfahren sind mit dem Metall-Inertgasschweißen (MIG-Schweißen) und dem Metall-Aktivgasschweißen (MAG-Schweißen) in zwei grundlegende Verfahrensarten untergliederbar. Zu den Lichtbogenschweißverfahren, die nicht mit einer abschmelzenden Elektrode arbeiten, zählt beispielsweise das Wolfram-Inertgasschweißen (WIG-Schweißen), bei dem eine nicht abschmelzende Wolframelektrode eingesetzt wird. Zu den Lichtbogenschweißverfahren gehört weiterhin beispielsweise das Plasmaschweißen.

Bei dem Schweißzusatz kann es sich insbesondere um einen elektrisch leitfähigen Schweißzusatz handeln. Der Schweißzusatz kann insbesondere in Form eines Schweißdrahts vorliegen. Der Schweißdraht kann insbesondere mittels einer Schweißdrahtfördervorrichtung in Richtung des Werkstücks und damit in Richtung des Schweißbads gefördert werden.

Dass erfindungsgemäß der Schweißzusatz verschieden von einer Schweißelektrode des Lichtbogenschweißgeräts ist, verdeutlicht, dass der Schweißzusatz von der Schweißelektrode, zwischen der und dem Werkstück beim Lichtbogenschweißen der Lichtbogen brennt, verschieden ist. Damit ist klar, dass z.B. im Fall des MSG-Schweißens der Schweißzusatz von der abschmelzenden Elektrode des Lichtbogenschweißgeräts verschieden ist.

Dass die Heizvorrichtung eingerichtet ist, den Schweißzusatz mit Wechselstrom zu beaufschlagen, kann bedeuten, dass wenn eine elektrisch leitfähige Verbindung zwischen der Heizvorrichtung und dem Schweißzusatz besteht, die Heizvorrichtung dem Schweißzusatz einen Wechselstrom zuführen kann, so dass der Wechselstrom durch den Schweißzusatz fließt. Die Heizvorrichtung kann den Schweißzusatz beispielsweise über ein Kontaktrohr des Schweißbrenners kontaktieren.

Eine gleichwertige Formulierung dafür, dass die Heizvorrichtung eingerichtet ist, den Schweißzusatz mit einem Wechselstrom zu beaufschlagen, ist dass die Heizvorrichtung eingerichtet ist, den Schweißzusatz mit einer Wechselspannung zu beaufschlagen. Sowohl der Fall, dass die Heizvorrichtung zur Beaufschlagung des Schweißzusatzes eine Stromstärkenverlauf als auch der Fall dass die Heizvorrichtung einen Spannungsverlauf und damit mittelbar einen Stromstärkenverlauf vorgibt, sind von der Erfindung umfasst. Durch das Beaufschlagen mit dem Wechselstrom wird der Schweißzusatz zumindest abschnittsweise erhitzt, so dass auch die Formulierung gebraucht werden kann, dass die Heizvorrichtung eingerichtet ist, den Schweißzusatz zum Erhitzen mit einem Wechselstrom zu beaufschlagen.

Zu Beaufschlagung kann die Heizvorrichtung eine Stromquelle und/oder eine Spannungsquelle umfassen. Ferner kann eine Steuerung, z.B. in Form einer Steuereinheit, vorgesehen sein, die die Stromquelle bzw. die Spannungsquelle steuert und so den Strom- bzw. den Spannungsverlauf vorgibt. Der Begriff des Steuerns umfasst hier auch den Begriff der Regelung des Strom- bzw. Spannungsverlaufs, bei der die Stromstärke bzw. die Spannung gemessen und als Messwert an die Steuerung zurückgeliefert wird, so dass die Steuerung einen Stromstärken- bzw. Spannungsstellwert basierend auf dem rückgekoppelten Messwert anpassen kann. Zu diesem Zweck kann die Steuerung Messmittel zur Erfassung der Stromstärke bzw. der Spannung beinhalten.

Die Steuerung unterliegt keinerlei Beschränkungen bezüglich der Komponenten, aus denen sie besteht. So kann sie beispielsweise einen Prozessor, z.B. einen Mikroprozessor, umfassen, der die nötigen Steueroperationen vornimmt und dazu auf einen Speicher, beispielsweise einen Flash-Speicher, zurückgreift, in dem die genaue Art und Reihenfolge der auszuführenden Steueroperationen, z.B. als Programmcode, hinterlegt ist. Die Steueroperationen bzw. der Programmcode können beispielsweise in einen Speicher mit wahlfreiem Zugriff (engl. random access memory, RAM) geladen werden und von dem Prozessor ausgeführt werden. Alternativ sind der Einsatz einer anwendungsspezifischen integrierten Schaltung (application specific integrated circuit - ASIC), eines Field Programmable Gate Array (FPGA) oder beliebige andere Lösungen denkbar.

Die Heizvorrichtung kann eine separate Heizvorrichtung sein, die z.B. über ein eigenes Gehäuse verfügen und räumlich beabstandet gegenüber anderen Komponenten eines Lichtbogenschweißgeräts, mit denen zusammen sie zum Einsatz kommt, angeordnet werden kann. Die Heizvorrichtung kann aber auch in eine andere Vorrichtung, z.B. eine Schweißstromquelle, die die Schweißelektrode zur Aufrechterhaltung eines Lichtbogens mit Energie versorgt, integriert sein und sich z.B. mit einer solchen Vorrichtung ein Gehäuse teilen.

Das erfindungsgemäße Lichtbogenschweißgerät kann neben einer Heizvorrichtung beispielsweise eine oder mehrere der folgenden Komponenten enthalten: eine Schweißstromquelle, eine Schweißzusatzfördervorrichtung, einen Schweißbrenner, eine Schweißelektrodenvorschubeinrichtung, z.B. eine Schweißdrahtfördervorrichtung im Falle eines MSG-Schweißgeräts, und eine Schutzgas- oder Aktivgasversorgung. Bei dem Lichtbogenschweißgerät kann es sich um jeden Typ von Lichtbogenschweißgerät handeln. Insbesondere kann es sich jedoch um ein WIG-Schweißgerät handeln. Da Schweißgeräte dieses Typs mit einer nicht abschmelzenden Elektrode arbeiten, werden hier besonders häufig Schweißzusätze verwendet, so dass gute Einsatzbedingungen für eine Heizvorrichtung vorliegen können.

Gemäß einem Ausführungsbeispiel ist eine dem Schweißzusatz mittels des Wechselstroms zu beaufschlagende elektrische Leistung vorgebbar.

Neben dem Material des konkret verwendeten Schweißzusatzes und seinem Querschnitt bestimmt die elektrische Leistung, mit der der Schweißzusatz beaufschlagt wird, maßgeblich, wie schnell und wie stark sich der Schweißzusatz erwärmt. Damit ist bei vorgegebener Beschaffenheit des Schweißzusatzes die ihm zugeführte elektrische Leistung von entscheidender Bedeutung für das Erhitzen und Abschmelzen des Schweißzusatzes - und damit für das Schweißergebnis. Ferner existiert eine Obergrenze für die elektrische Leistung, mit der der Schweißzusatz maximal beaufschlagt werden kann, wenn gute Schweißergebnisse erzielt werden sollen. Insbesondere darf die Leistung nicht so groß sein, dass es neben dem Lichtbogen zwischen Schweißelektrode und Werkstück zu einer Zündung eines zweiten Lichtbogens zwischen dem Ende des Schweißzusatzes und dem Werkstück kommt. Es ist daher im Interesse des Schweißers, dass die dem Schweißzusatz zu beaufschlagende elektrische Leistung vorgebbar ist. Diesem Interesse wird das hier erörterte Ausführungsbeispiel gerecht.

Dass die dem Schweißzusatz mittels des Wechselstroms zu beaufschlagende elektrische Leistung vorgebbar ist, kann insbesondere bedeuten, dass diese elektrische Leistung an der Heizvorrichtung vorgebbar ist. Die Vorgebbarkeit der elektrischen Leistung kann insbesondere eine Einstellbarkeit der elektrischen Leistung bedeuten. Die dem Schweißzusatz mittels des Wechselstroms zu beaufschlagende elektrische Leistung kann beispielsweise dadurch vorgebbar sein, dass für den Schweißer eine entsprechende Einstellung vornehmbar sein kann. Dazu können Bedienmittel, z.B. ein Drehknopf oder ein berührungsempfindlicher Bildschirm (engl. touch screen), vorgesehen sein, die z.B. an der Heizvorrichtung oder auch an einem Schweißbrenner eines erfindungsgemäßen Lichtbogenschweißgeräts angeordnet sein können.

Dass die dem Schweißzusatz mittels des Wechselstroms zu beaufschlagende elektrische Leistung vorgebbar ist, umfasst dass diese elektrische Leistung indirekt vorgebbar ist. Beispielsweise kann statt der elektrischen Leistung ein Effektivwert des Wechselstroms vorgebbar sein, weil ein solcher Effektivwert in die elektrische Leistung, mit der der Schweißzusatz beaufschlagt wird, umrechenbar ist. Gemäß einem weiteren Beispiel kann die elektrische Leistung auch vorgebbar sein, indem sämtliche diese elektrische Leistung bestimmenden Parameter vorgegeben werden. So können beispielsweise die Art der Form des Verlaufs des Wechselstroms, z.B. ein sinusförmiger Verlauf, und die Amplitude und damit auch die elektrische Leistung, die dem Schweißzusatz mittels des Wechselstroms zu beaufschlagen ist, vorgebbar sein. Auch für die indirekte Vorgabe der elektrischen Leistung gilt, dass entsprechende Bedienmittel vorgesehen sein können.

Die Vorgabe der elektrischen Leistung kann umgesetzt werden, indem z.B. die Heizvorrichtung eingerichtet ist, entsprechend der Vorgabe auf eine Steuerung, die eine für die Beaufschlagung des Schweißzusatzes mit Wechselstrom vorgesehene Strom- bzw. Spannungsquelle steuert, einzuwirken. Dazu können beispielsweise Bedienmittel, mittels derer die Vorgabe erfolgt, an die Steuerung gekoppelt sein.

Gemäß einem Ausführungsbeispiel ist die Heizvorrichtung eingerichtet, einen weiteren Parameter an eine vorgegebene elektrische Leistung für die Beaufschlagung des Schweißzusatzes, insbesondere automatisch, d.h. benutzerinteraktionslos, anzupassen.

Wie bereits vorstehend erläutert, ist die elektrische Leistung, mit der der Schweißzusatz beaufschlagt wird, von maßgeblicher Bedeutung für das Schweißergebnis. Sie bildet die elektrische Schlüsselgröße beim Erhitzen des Schweißzusatzes. Dadurch, dass im Rahmen des Ausführungsbeispiels die Heizvorrichtung eingerichtet ist, einen weiteren Parameter an eine vorgegebene elektrische Leistung für die Beaufschlagung des Schweißzusatzes anzupassen, kann eine Unterordnung des weiteren Parameters unter die vorgegebene elektrische Leistung erreicht werden. Es kann sichergestellt werden, dass die vorgegebene elektrische Leistung in jedem Fall eingehalten wird.

Ein Beispiel eines weiteren Parameters, der an eine vorgegebene elektrische Leistung angepasst werden kann, ist beispielsweise die Amplitude des Wechselstroms. Damit sich die vorgegebene elektrische Leistung einstellt, kann die Amplitude nach Bedarf vergrößert oder verkleinert werden. Ein anderes Beispiel ist die Art der Form des Verlaufs des Wechselstroms. Beispielsweise kann die Art der Form des Verlaufs geändert werden, z.B. von einem sinusförmigen Verlauf zu einem rechteckförmigen Verlauf. Dass die Heizvorrichtung eingerichtet ist, einen neben der vorgegebenen elektrischen Leistung vorhandenen weiteren Parameter an die elektrische Leistung anzupassen, umfasst, dass nicht nur ein sondern mehrere Parameter an die elektrische Leistung angepasst werden.

Die Anpassung des weiteren Parameters kann beinhalten, dass entsprechende Berechnungen durchgeführt werden, um festzustellen, wie der weitere Parameter unter den jeweils gegebenen Umständen anzupassen ist, damit sich die vorgegebene elektrische Leistung einstellt. Dies kann insbesondere seitens der Heizvorrichtung erfolgen. Beispielsweise kann die Anpassung des weiteren Parameters von einer Steuerung vorgenommen werden, die z.B. auch eine für die Beaufschlagung des Schweißzusatzes mit Wechselstrom vorgesehene Strom- bzw. Spannungsquelle steuert.

Gemäß einem Ausführungsbeispiel ist eine Amplitude des Wechselstroms vorgebbar ist.

Die Amplitude des beaufschlagten Wechselstroms bestimmt, wie weit der Lichtbogen beim Schweißen durch die magnetische Beeinflussung ausgelenkt wird. Damit bestimmt sie auch, wie groß die Ausdehnung des erzeugten Schweißbads ist. Ferner wird bei gleichbleibender Lichtbogenleistung bestimmt, wie tief bzw. flach das Schweißbad ist. Ebenso wird die Aufmischung des Schweißzusatzmaterials mit dem Werkstückmaterial beeinflusst. Ist die Amplitude des dem Schweißzusatz beaufschlagten Wechselstroms vorgebbar, können diese Effekte gesteuert werden, was zusätzliche Freiheit für die Gestaltung des Schweißprozesses und damit für die Lösung von Schweißaufgaben eröffnen kann.

Ein sinnvoller Bereich für die Amplitude kann sich beispielsweise von einschließlich 100 A bis einschließlich 300 A erstrecken.

Dass eine Amplitude des Wechselstroms vorgebbar ist, kann insbesondere bedeuten, dass die Amplitude an der Heizvorrichtung vorgebbar ist. Die Vorgebbarkeit der Amplitude kann insbesondere eine Einstellbarkeit der Amplitude bedeuten. Die Möglichkeit zur Vorgabe bzw. zur Vornahme der Einstellung kann insbesondere einem menschlichen Bediener eingeräumt sein, z.B. durch Vorsehen entsprechender Bedienmittel. Die Umsetzung der Vorgabe kann abermals mittels einer Steuerung der Heizvorrichtung erfolgen.

Ist neben der Vorgabe einer Amplitude des Wechselstroms eine dem Schweißzusatz mittels des Wechselstroms zu beaufschlagende elektrische Leistung vorgegeben und ist die Heizvorrichtung eingerichtet, einen weiteren Parameter an die vorgegebene elektrische Leistung anzupassen, kann die Anpassung an die elektrische Leistung beispielsweise dahingehend vorgenommen werden, dass die Form des Verlaufs des Wechselstroms angepasst wird. Insbesondere kann die Art der Form des Verlaufs des Wechselstroms angepasst, d.h. entsprechend vorgegeben werden, damit sich bei Einhaltung der vorgegebenen Amplitude die vorgegebene elektrische Leistung einstellt. Ist z.B. bei einer rechteckförmigen Spannung die Amplitude nicht groß genug, kann stattdessen gegebenenfalls eine trapezförmige Spannung vorgegeben werden.

Gemäß einem Ausführungsbeispiel ist die Art einer Form des Verlaufs des Wechselstroms vorgebbar.

Je nach Art der Form des Wechselstroms kann sich eine unterschiedlich gestaltete magnetische bedingte Auslenkung des Lichtbogens beim Schweißen ergeben. Unterschiedliche Arten der Form des Verlaufs können für verschiedene Schweißaufgaben unterschiedlich gut geeignet sein. Dadurch, dass bei dem hier diskutierten Ausführungsbeispiel die Art der Form des Verlaufs des Wechselstroms vorgebbar ist, kann eine für die jeweilige Schweißaufgabe passende Art der Form des Verlaufs ausgewählt werden.

Dass die Art einer Form des Verlaufs des Wechselstroms vorgebbar ist, kann insbesondere bedeuten, dass eine Grundform bzw. ein Typ der Form des Verlaufs des Wechselstroms, z.B. sinusförmig oder rechteckförmig, vorgebbar ist. Durch die Vorgabe der Art einer Form des Verlaufs des Wechselstroms muss der Verlauf des Wechselstroms nicht vollständig definiert sein. Beispielsweise können die Amplitude des Wechselstroms oder die Frequenz des Wechselstroms den tatsächlichen Verlauf des Wechselstroms mit bestimmen.

Dass die Art einer Form des Verlaufs des Wechselstroms vorgebbar ist, kann beinhalten, dass sie an der Heizvorrichtung vorgebbar ist. Die Vorgebbarkeit der Art der Form des Wechselstroms kann insbesondere eine Einstellbarkeit der Art der Form bedeuten. Die Vorgebbarkeit kann auf das Treffen einer Auswahl aus vordefinierten Arten von Formen beschränkt sein. Die Möglichkeit zur Vorgabe bzw. zur Vornahme der Einstellung kann insbesondere einem menschlichen Bediener eingeräumt sein, z.B. durch Vorsehen entsprechender Bedienmittel. Die Umsetzung der Vorgabe kann abermals mittels einer Steuerung der Heizvorrichtung erfolgen.

Ist neben der Vorgabe einer Art einer Form des Verlaufs des Wechselstroms eine dem Schweißzusatz mittels des Wechselstroms zu beaufschlagende elektrische Leistung vorgegeben und ist die Heizvorrichtung eingerichtet, einen weiteren Parameter an die vorgegebene elektrische Leistung anzupassen, kann die Anpassung an die elektrische Leistung beispielsweise dahingehend vorgenommen werden, dass die Amplitude des Wechselstroms angepasst wird.

Gemäß einem Ausführungsbeispiel weist der Wechselstrom einen sinusförmigen Verlauf auf.

Ein sinusförmiger Verlauf des Wechselstroms, eingeschlossen sind hier auch Phasenverschiebung, die z.B. einen kosinusförmigen Verlauf des Wechselstroms bedeuten können, kann zur Folge haben, dass bei einer vorgegebenen elektrischen Leistung, mit der der Schweißzusatz zu beaufschlagen ist, eine relativ große Amplitude des Wechselstroms auftreten kann. Eine solche relativ hohe Amplitude des Wechselstroms hat eine relativ weite, magnetisch bedingte Auslenkung des Lichtbogens beim Schweißen zur Folge. Damit kann eine vergleichsweise große Ausdehnung und geringe Tiefe des Schweißbads sowie eine vergleichsweise geringe Aufmischung des Schweißzusatzmaterials mit dem Werkstückmaterial erreicht werden. Zudem ändert sich bei einem sinusförmigen Verlauf des Wechselstroms die Stromstärke des Wechselstroms - und damit die Auslenkung des Lichtbogens - kontinuierlich, so dass ein relativ gleichmäßiges Aufschmelzen der von dem Lichtbogen überstrichenen Werkstoffoberfläche erreicht werden kann. Für die Lösung bestimmter Schweißaufgaben kann dies vorteilhaft sein.

Dass der Wechselstrom einen sinusförmigen Verlauf aufweist umfasst den Fall, dass eine Sinusform als eine von mehreren mit der Heizvorrichtung realisierbaren Arten der Formen des Verlaufs des Wechselstroms vorgegeben wurde sowie den Fall, dass die Heizvorrichtung eingerichtet ist, unveränderlich einen sinusförmigen Verlauf des Wechselstroms zu bewirken, z.B. weil eine entsprechend Steuerung der Heizvorrichtung entsprechend konfiguriert ist.

Gemäß einem Ausführungsbeispiel weist der Wechselstrom einen rechteckförmigen Verlauf auf.

Ein rechteckförmiger Verlauf des Wechselstroms kann zur Folge haben, dass bei einer vorgegebenen elektrischen Leistung, mit der der Schweißzusatz zu beaufschlagen ist, eine relativ geringe Amplitude des Wechselstroms auftreten kann. Eine solche relativ geringe Amplitude des Wechselstroms hat - z.B. im Vergleich zu einem sinusförmigen Verlauf - eine relativ geringe, magnetisch bedingte Auslenkung des Lichtbogens beim Schweißen zur Folge. Damit kann eine vergleichsweise geringe Ausdehnung und große Tiefe des Schweißbads erreicht werden, da eine Konzentrierung der Lichtbogenleistung stattfindet. Da der Wert der Stromstärke des Wechselstroms sich bei rechteckförmigem Verlauf nur ändert, wenn ein Polaritätswechsel stattfindet, ansonsten aber konstant ist, ist auch die Auslenkung des Lichtbogens über vergleichsweise lange Zeit konstant, so dass ein punktuelles Einwirken des Lichtbogens auf das Werkstück erfolgt. Für die Lösung bestimmter Schweißaufgaben kann dies vorteilhaft sein.

Dass der Wechselstrom einen rechteckförmigen Verlauf aufweist umfasst den Fall, dass eine Rechteckform als eine von mehreren mit der Heizvorrichtung realisierbaren Arten der Formen des Verlaufs des Wechselstroms vorgegeben wurde sowie den Fall, dass die Heizvorrichtung eingerichtet ist, unveränderlich einen rechteckförmigen Verlauf des Wechselstroms zu bewirken, z.B. weil eine entsprechend Steuerung der Heizvorrichtung entsprechend konfiguriert ist.

Gemäß einem Ausführungsbeispiel weist der Wechselstrom einen trapezförmigen Verlauf auf.

Ein trapezförmiger Verlauf des Wechselstroms kann zur Folge haben, dass bei einer vorgegebenen elektrischen Leistung, mit der der Schweißzusatz zu beaufschlagen ist, die Amplitude des Wechselstroms zwischen der Amplitude eines sinusförmigen und eines rechteckförmigen Wechselstroms gleicher elektrischer Leistung liegt. Gleiches gilt folglich auch für die Auslenkung des Lichtbogens. Anders als bei einem sinusförmigen Verlauf findet keine kontinuierliche Veränderung der Stromstärke des Wechselstroms und damit der Lichtbogenauslenkung statt. Die Stromstärke und die Lichtbogenauslenkung bleiben aber bedingt durch die geringere Flankensteilheit in Vergleich zu einem rechteckförmigen Verlauf und bezogen auf die Periodendauer weniger lange gleich. Auch dies kann für die Lösung bestimmter Schweißaufgaben vorteilhaft sein.

Dass der Wechselstrom einen trapezförmigen Verlauf aufweist umfasst den Fall, dass eine Trapezform als eine von mehreren mit der Heizvorrichtung realisierbaren Arten der Formen des Verlaufs des Wechselstroms vorgegeben wurde sowie den Fall, dass die Heizvorrichtung eingerichtet ist, unveränderlich einen trapezförmigen Verlauf des Wechselstroms zu bewirken, z.B. weil eine entsprechend Steuerung der Heizvorrichtung entsprechend konfiguriert ist.

Beispiele weiterer Arten von Formen von Verläufen des Wechselstroms sind eine Dreiecksform und eine Sägezahnform.

Erfindungsgemäß sind Mischformen der hier beschriebenen Arten der Formen des Verlaufs des Wechselstroms untereinander oder mit anderen Arten möglich.

Gemäß einem Ausführungsbeispiel ist vorgebbar, dass der Verlauf des Wechselstroms gegenüber einer Nulllage versetzt ist.

So kann erreicht werden, dass für unterschiedliche Polaritäten des Wechselstroms, d.h. unterschiedliche mathematische Vorzeichen der Stromstärke, verschiedene maximale Beträge der Stromstärke auftreten. Anders ausgedrückt ist der Verlauf des Wechselstroms gegenüber der Nulllage asymmetrisch. Entsprechend stellt sich beim Schweißen auch eine unterschiedliche maximale Auslenkung des Lichtbogens zu unterschiedlichen Seiten ein. Dies kann für die Lösung bestimmter Schweißaufgaben vorteilhaft sein. Zum Beispiel kann beim Schweißen die sinnvolle maximale Auslenkung des Lichtbogens dadurch begrenzt sein, dass der Lichtbogen nicht über eine Kante des Werkstücks hinaus ausgelenkt werden soll, während zu einer entgegengesetzten Seite die gewünschte maximale Auslenkung größer ist.

Dass der Verlauf des Wechselstroms gegenüber der Nulllage versetzt ist, kann z.B. dadurch erreicht werden, dass bei einer an sich symmetrischen Form des Verlaufs des Wechselstroms dem Wechselstrom ein entsprechender Versatz addiert wird, so dass der Verlauf des Wechselstroms, insbesondere der Wechselstromstärke, um den Versatz gegenüber der Nulllage verschoben ist. Der Versatz kann vorgebbar sein. Insbesondere kann die Vorgebbarkeit des Versatzes eine Einstellbarkeit des Versatzes bedeuten. Die Möglichkeit zur Vorgabe bzw. zur Vornahme der Einstellung kann insbesondere einem menschlichen Bediener eingeräumt sein, z.B. durch Vorsehen entsprechender Bedienmittel. Die Umsetzung der Vorgabe kann mittels einer Steuerung der Heizvorrichtung erfolgen.

Ist neben der Vorgabe eines Versatzes des Verlaufs des Wechselstroms eine dem Schweißzusatz mittels des Wechselstroms zu beaufschlagende elektrische Leistung vorgegeben und ist die Heizvorrichtung eingerichtet, einen weiteren Parameter an die vorgegebene elektrische Leistung anzupassen, kann die Anpassung an die elektrische Leistung beispielsweise dahingehend vorgenommen werden, dass die Amplitude des Wechselstroms angepasst wird. Zusätzlich oder alternativ kann eine Anpassung der Art der Form des Verlaufs des Wechselstroms vorgenommen werden.

Gemäß einem Ausführungsbeispiel ist eine Frequenz des Wechselstroms vorgebbar.

Die Wechselstromfrequenz bestimmt maßgeblich, wie häufig und wie schnell sich der Wert der Stromstärke des Wechselstroms ändert. Damit bestimmt sie ebenfalls maßgeblich, wie schnell sich die Lichtbogenauslenkung und damit die Lichtbogenposition ändern. Über die Lichtbogenposition wird bestimmt, an welcher Stelle des Werkstücks Energie in das Werkstück eingebracht wird. Ist die Frequenz des Wechselstroms vorgebbar, kann eine besonders gute Einstellbarkeit der Veränderung der Lichtbogenposition erreicht werden.

Dass eine Frequenz des Wechselstroms vorgebbar ist, kann insbesondere bedeuten, dass die Frequenz an der Heizvorrichtung vorgebbar ist. Die Vorgebbarkeit der Frequenz kann insbesondere eine Einstellbarkeit der Frequenz bedeuten. Die Möglichkeit zur Vorgabe bzw. zur Vornahme der Einstellung kann insbesondere einem menschlichen Bediener eingeräumt sein, z.B. durch Vorsehen entsprechender Bedienmittel. Die Umsetzung der Vorgabe kann abermals mittels einer Steuerung der Heizvorrichtung erfolgen.

Die Frequenz kann beispielsweise in einem Bereich von einschließlich 20 bis einschließlich 2000 Hz liegt, insbesondere in einem Bereich von einschließlich 20 bis einschließlich 1000 Hz, speziell in einem Bereich von 50 bis 150 Hz, konkreter in einem Bereich von 90 bis 110 Hz. Die Möglichkeit zur Vorgabe der Frequenz kann auf einen Bereich, insbesondere einen der obigen Bereiche, beschränkt sein.

Gemäß einem Ausführungsbeispiel ist die Heizvorrichtung eingerichtet, im Verlauf eines Schweißprozesses die elektrische Leistung für die Beaufschlagung des Schweißzusatzes zu variieren.

Auf diese Weise kann ein hinsichtlich der elektrischen Leistung gepulste Beaufschlagung des Schweißzusatzes mit dem Wechselstrom erfolgen. Perioden größerer und kleinerer elektrischer Leistung können sich abwechseln. Beispielsweise kann die Variation der elektrischen Leistung durch Variation der Amplitude des Wechselstroms erfolgen. So kann erreicht werden, dass in einer Periode mit größerer Amplitude die maximale Lichtbogenauslenkung größer ist, während in einer Periode mit kleinerer Amplitude die Lichtbogenauslenkung kleiner ist. Somit wird in Perioden größere Amplitude eine größerer Ausdehnung des Schweißbads erreicht, während in Perioden kleinerer Amplitude eine Konzentration der Lichtbogenleistung auf den inneren Bereich des Schweißbads erreicht wird. Es kann ein Schweißbad gebildet werden, dessen Tiefe im Innenbereich größer als im Außenbereich ist.

Die Einrichtung der Heizvorrichtung, im Verlauf eines Schweißprozesses die elektrische Leistung für die Beaufschlagung des Schweißzusatzes zu variieren, kann z.B. dadurch realisiert sein, dass eine Steuerung vorgesehen ist, die eingerichtet ist, eine Strom- bzw. Spannungsquelle der Heizvorrichtung, die den Wechselstrom bereitstellt, entsprechend anzusteuern. Es kann an der Heizvorrichtung vorgebbar bzw. einstellbar sein, dass im Verlauf eines Schweißprozesses die elektrische Leistung variiert werden soll. Die Möglichkeit zur Vorgabe bzw. zur Vornahme der Einstellung kann insbesondere einem menschlichen Bediener eingeräumt sein, z.B. durch Vorsehen entsprechender Bedienmittel.

Ist neben der Vorgabe, im Verlauf eines Schweißprozesses die elektrische Leistung für die Beaufschlagung des Schweißzusatzes zu variieren, eine dem Schweißzusatz mittels des Wechselstroms zu beaufschlagende elektrische Leistung vorgegeben und ist die Heizvorrichtung eingerichtet, einen weiteren Parameter an die vorgegebene elektrische Leistung anzupassen, kann die Anpassung beispielsweise dahingehend vorgenommen werden, dass im Mittel über die unterschiedlich gestalteten Perioden des Wechselstroms die vorgegebene elektrische Leistung erreicht wird. Dazu kann beispielsweise eine bzw. die Amplituden des Wechselstroms angepasst werden.

Gemäß einem Ausführungsbeispiel unterscheidet sich in einer Periode des Wechselstroms die Dauer des Zeitraums, in dem der Wechselstrom ein positives Vorzeichen besitzt, von der Dauer des Zeitraums, in dem der Wechselstrom ein negatives Vorzeichen besitzt.

Die Richtung der Lichtbogenauslenkung ist abhängig vom Vorzeichen, d.h. der Polarität, des Wechselstroms. Tritt während einer Periode des Wechselstroms ein Vorzeichen des Wechselstroms für eine längere Dauer auf als das ihm entgegengesetzte Vorzeichen, ist auch die Dauer des Zeitraums, in der beim Schweißen durch den Lichtbogen ein Energieeintrag auf der einen Seite des Werkstücks stattfindet länger als die Dauer des Zeitraums, in dem durch den Lichtbogen ein Energieeintrag auf der anderen Seite des Werkstücks stattfindet. Jedenfalls bei gleicher Amplitude des Wechselstroms in beiden Zeiträumen ist damit auch der absolute Energieeintrag auf der einen Seite des Werkstücks größer als auf der anderen. Eine bezogen auf die Position der Schweißelektrode asymmetrische Schweißung wird möglich.

Dass sich in einer Periode des Wechselstroms die Dauer des Zeitraums, in dem der Wechselstrom ein positives Vorzeichen besitzt, von der Dauer des Zeitraums, in dem der Wechselstrom ein negatives Vorzeichen besitzt, unterscheidet, meint, dass sich die Dauern der Zeiträume, in denen die Stromstärke des Wechselstroms positiv bzw. negativ ist, unterscheiden. Eine Periode des Wechselstroms kann aus eine negativen und einer positiven Halbwelle zusammengesetzt betrachtet werden, wobei das Vorzeichen des Wechselstroms, d.h. seiner Stromstärke definiert, ob die Halbwelle positiv oder negativ ist. Wenn eine positive und eine negative Halbwelle durchlaufen sind, ist eine Periode vollständig durchlaufen worden und die nächste Periode kann sich anschließen. Selbstverständlich ist es definitionsabhängig, wann die Stromstärke des Wechselstroms als positiv und wann sie als negativ angesehen wird.

Der Dauern der Zeiträume können vorgebbar sein. Insbesondere kann die Vorgebbarkeit der Dauern eine Einstellbarkeit der Dauern bedeuten. Die Möglichkeit zur Vorgabe bzw. zur Vornahme der Einstellung kann insbesondere einem menschlichen Bediener eingeräumt sein, z.B. durch Vorsehen entsprechender Bedienmittel. Die Umsetzung der Vorgabe kann mittels einer Steuerung der Heizvorrichtung erfolgen.

Ist neben der Vorgabe der Dauer der Zeiträume eine dem Schweißzusatz mittels des Wechselstroms zu beaufschlagende elektrische Leistung vorgegeben und ist die Heizvorrichtung eingerichtet, einen weiteren Parameter an die vorgegebene elektrische Leistung anzupassen, kann die Anpassung an die elektrischen Leistung beispielsweise dahingehend vorgenommen werden, dass die Amplitude des Wechselstroms angepasst wird. Zusätzlich oder alternativ kann eine Anpassung der Art der Form des Verlaufs des Wechselstroms vorgenommen werden.

Der erfindungsgemäße Schweißbrenner umfasst eine erste Schweißzusatzzuführung für einen ersten Schweißzusatz und eine zweite Schweißzusatzzuführung für einen zweiten Schweißzusatz. Dabei sind die erste Schweißzusatzzuführung und die zweite Schweißzusatzzuführung in zwei zueinander senkrechte Richtungen, die wiederum beide senkrecht zu einer Haupterstreckungsrichtung der Schweißelektrode sind, versetzt zueinander angeordnet. Der erste Schweißzusatz ist durch eine dem Schweißbrenner zugeordnete Heizvorrichtung mit einem ersten Wechselstrom beaufschlagbar und der zweite Schweißzusatz ist durch eine dem Schweißbrenner zugeordnete Heizvorrichtung mit einem zweiten Wechselstrom beaufschlagbar.
Durch den Versatz der ersten Schweißzusatzzuführung und der zweiten Schweißzusatzzuführung in zwei zueinander senkrechte Richtungen kann bei Beaufschlagung des in der ersten Schweißzusatzzuführung geführten ersten Schweißzusatzes und bei Beaufschlagung des in der zweiten Schweißzusatzzuführung geführten zweiten Schweißzusatzes eine Auslenkung des Lichtbogens in zwei zueinander senkrechte Richtungen erfolgen. Damit kann eine gezielte, zweidimensionale Auslenkung des Lichtbogens durchführbar sein. So kann der Lichtbogen optimal an die Schweißaufgabe angepasst ausgelenkt werden.
Die Heizvorrichtung, die zur Beaufschlagung des ersten Schweißzusatzes mit dem ersten Wechselstrom dient, kann verschieden von der Heizvorrichtung sein, die zur Beaufschlagung des zweiten Schweißzusatzes mit dem zweiten Wechselstrom dient. Es kann sich aber auch um dieselbe Heizvorrichtung handeln. In diesem Fall kann die Heizvorrichtung zwei Wechselstromquellen umfassen, wobei eine erste Wechselstromquelle zur Beaufschlagung des ersten Schweißzusatzes dient und eine zweite Wechselstromquelle zur Beaufschlagung des zweiten Schweißzusatzes dient, so dass der erste Wechselstrom und der zweite Wechselstrom unterschiedlich sein können. Die Wechselstromquelle bzw. die Wechselstromquellen können von einer bereits beschriebenen Steuerung gesteuert werden. Im Fall zweier Wechselstromquellen können auch zwei separate Steuerungen vorhanden sein. Alternativ kann bei nur einer Steuerung, diese gegenüber einer Steuerung, die nur eine Wechselstromquelle steuert, anders gestaltet sein. Insbesondere kann sie entsprechend mehr Eingänge bzw. Ausgänge aufweisen und eine Software der Steuerung kann andere Instruktionen umfassen.

Der erste Wechselstrom und der zweite Wechselstrom können gleiche oder unterschiedliche Amplituden aufweisen. Ebenso gilt, dass die Art der Form des Verlaufs, die Frequenzen etc. gleich oder unterschiedlich sein können.

Es kann vorgesehen sein, dass eine dem ersten Schweißzusatz mittels des ersten Wechselstroms zu beaufschlagende Leistung vorgebbar ist. Es kann ebenso vorgesehen sein, dass eine dem zweiten Schweißzusatz mittels des zweiten Wechselstroms zu beaufschlagende Leistung vorgebbar ist. Es kann auch nur eine Leistung vorgebbar sein, wobei diese Leistung die Summer der dem ersten Schweißzusatz und der dem zweiten Schweißzusatz zugeführten Leistung ist.

Bei dem erfindungsgemäßen Schweißbrenner kann vorgesehen sein, dass der erste und/oder der zweite Schweißzusatz senkrecht zu einer Schweißrichtung gegenüber der Schweißelektrode versetzt geführt ist/sind.

Gemäß einem Ausführungsbeispiel eines erfindungsgemäßen Schweißbrenners sind die erste Schweißzusatzzuführung und die zweite Schweißzusatzzuführung in beiden der zwei zueinander senkrechten Richtungen auf unterschiedlichen Seiten der Schweißelektrode angeordnet.

Aufgrund der Anordnung der Schweißzusatzführungen auf unterschiedlichen Seiten der Schweißelektrode in den beiden zueinander senkrechten Richtungen kann dann zu beiden Schweißzusätzen hin eine weite Auslenkung des Lichtbogens erreicht werden. Der Lichtbogen kann daher ggf. sogar gegenüberliegende Flanken eines Werkstücks erreichen. Dabei kann jedoch ein symmetrisches Pendeln gegenüber der Schweißelektrode möglich sein.

Gemäß einem Ausführungsbeispiel eines erfindungsgemäßen Schweißbrenners schließen die erste Schweißzusatzzuführung und die zweite Schweißzusatzzuführung einen rechten Winkel ein.
Eine andere Formulierung ist, dass die erste Schweißzusatzzuführung und die zweite Schweißzusatzzuführung senkrecht zueinander ausgerichtet sind. Ein Fall einer solchen Ausrichtung liegt beispielsweise vor, wenn eine Ausgangsöffnung der ersten Schweißzusatzzuführung und eine Ausgangsöffnung der zweiten Schweißzusatzzuführung an entsprechend unterschiedlichen Winkelpositionen auf einem Kreisbogen angeordnet sind. Unter einem rechten Winkel soll hier zwar insbesondere ein Winkel von 90° verstanden werden, aber es sind auch Winkel in einem Toleranzbereich von ±10° eingeschlossen.

Gemäß einem Ausführungsbeispiel eines erfindungsgemäßen Schweißbrenners sind eine Phase des ersten Wechselstroms und eine Phase des zweiten Wechselstroms aufeinander abstimmbar.

So kann erreicht werden, dass durch Abstimmung der Phasen des ersten Wechselstroms und des zweiten Wechselstroms festgelegt werden kann, wie die relative Auslenkung des Lichtbogens durch den ersten Wechselstrom bezogen auf den die Auslenkung durch den zweiten Wechselstrom erfolgen soll. Beispielsweise kann die Abstimmung so vorgenommen sein bzw. vornehmbar sein, dass beim Lichtbogenschweißen eine Auslenkung des Lichtbogens entlang einer geschlossenen Kurve ermöglicht wird, z.B. einer kreisförmigen oder ellipsenförmigen Kurve, d.h. dass eine Rotation des Lichtbogens ermöglicht wird. So kann z.B. bei sinusförmigen Wechselströmen gleicher Amplitude und gleicher Frequenz durch einen Phasenunterschied von 90° erreicht werden, dass der Lichtbogen entlang einer Kreisbahn ausgelenkt wird.

Die Abstimmung der Phasen kann bedeuten, dass sowohl die Phase des ersten Wechselstroms als auch die Phase des zweiten Wechselstroms vorgegeben werden können. Alternativ kann auch der Unterschied zwischen den Phasen vorgebbar sein. Insbesondere kann die Vorgebbarkeit der Phasen bzw. des Phasenunterschieds eine Einstellbarkeit bedeuten. Die Möglichkeit zur Vorgabe bzw. zur Vornahme der Einstellung kann insbesondere einem menschlichen Bediener eingeräumt sein, z.B. durch Vorsehen entsprechender Bedienmittel. Die Umsetzung der Vorgabe kann mittels einer Steuerung bzw. mehrerer Steuerungen erfolgen. Die Abstimmung kann aber auch fest vorgegeben sein.

Nachfolgend wird die Erfindung anhand von Figuren erläutert. Dabei zeigen
- Fig. 1a: eine schematische Darstellung eines Lichtbogenschweißgeräts, welches eine Heizvorrichtung umfasst und mit welchem ein Verfahren realisierbar ist, eines Werkstücks und eines Lichtbogens, wobei in der dargestellten Betriebssituation eine Auslenkung des Lichtbogens in eine erste Richtung erfolgt; Dieses Lichtbogenschweißgerät fällt nicht unter den Schutzumfang der Ansprüche.
- Fig. 1b: eine schematische Darstellung des Lichtbogenschweißgeräts aus Fig. 1a, wobei in der dargestellten Betriebssituation ein Nulllagendurchgang des dem Schweißzusatz beaufschlagten Wechselstroms erfolgt;
- Fig. 1c: eine schematische Darstellung des Lichtbogenschweißgeräts aus Fig. 1a, wobei in der dargestellten Betriebssituation eine Auslenkung des Lichtbogens in eine zweite Richtung erfolgt;
- Fig. 2a: eine beispielhafte Gegenüberstellung schematischer Verläufe des Wechselstroms, mit dem der Schweißzusatz beaufschlagt werden kann, wobei die Verläufe sich hinsichtlich der Arten ihrer Formen unterscheiden;
- Fig. 2b: ein Darstellung eines schematischen Verlaufs des Wechselstroms, wobei der Verlauf des Wechselstroms gegenüber der Nulllage versetz ist;
- Fig. 2c: eine beispielhafte Gegenüberstellung schematischer Verläufe des Wechselstroms, wobei die Verläufe sich hinsichtlich ihrer Frequenz unterscheiden;
- Fig. 2d: eine Darstellung eines schematischen Verlaufs des Wechselstroms, wobei die elektrische Leistung des Wechselstroms variiert;
- Fig. 2e: schematische Verläufe des Wechselstroms, wobei die Verläufe sich hinsichtlich der Arten ihrer Formen unterscheiden und wobei sich jeweils in einer Periode des Wechselstroms die Dauer des Zeitraums, in dem der Wechselstrom ein positives Vorzeichen besitzt, von der Dauer des Zeitraums, in dem der Wechselstrom ein negatives Vorzeichen besitzt, unterscheidet;
- Fig. 3: eine schematische Darstellung eines Schweißbrenners im Einsatz beim Schweißen eines Werkstücks in einer Draufsicht auf das Werkstück; Dieser Schweißbrenner fällt nicht unter den Schutzumfang der Ansprüche.
- Fig. 4: eine schematische Darstellung eines ersten Ausführungsbeispiels eines erfindungsgemäßen Schweißbrenners im Einsatz beim Schweißen eines Werkstücks in einer Draufsicht auf das Werkstück;
- Fig. 5: eine schematische Darstellung eines zweiten Ausführungsbeispiels eines erfindungsgemäßen Schweißbrenners im Einsatz beim Schweißen eines Werkstücks in einer Draufsicht auf das Werkstück.

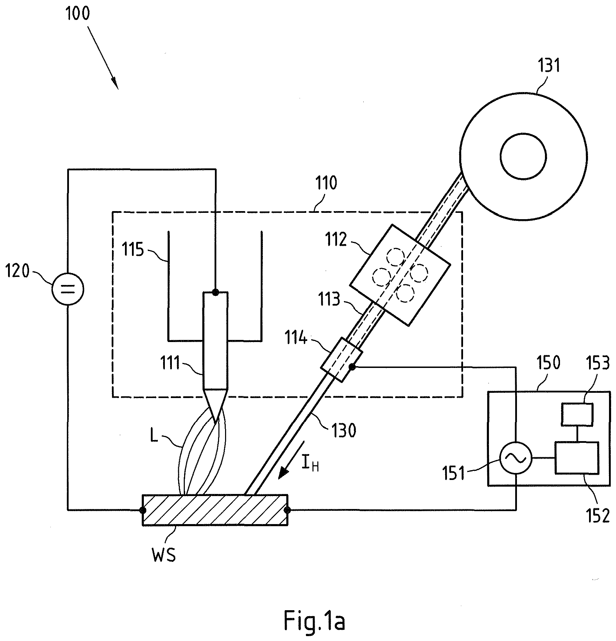

Fig. 1a zeigt eine schematische Darstellung eines Lichtbogenschweißgeräts 100, welches eine Heizvorrichtung 150 umfasst und mit welcher ein Verfahren realisierbar ist, eines Werkstücks WS und eines Lichtbogens L, wobei in der dargestellten Betriebssituation eine Auslenkung des Lichtbogens L in eine erste Richtung erfolgt.

Bei dem Lichtbogenschweißgerät 100 handelt es sich um ein WIG-Schweißgerät. Das Lichtbogenschweißgerät 100 umfasst einen Heißdrahtbrenner 110. In einem Kontaktrohr 115 des Heißdrahtbrenners 110 ist eine nichtabschmelzende Wolframelektrode 111 angeordnet. Das Lichtbogenschweißgerät 100 umfasst ferner eine Schweißstromquelle 120, die über das Kontaktrohr 115 elektrisch mit der Wolframelektrode 111 verbunden ist. Die Schweißstromquelle 120 kann die Wolframelektrode 111 mit elektrischer Leistung versorgen. So kann es zu einer Zündung und Aufrechterhaltung eines Lichtbogens L kommen. Der Lichtbogen L brennt zwischen der Spitze der Wolframelektrode 111 und der Oberfläche eines zu bearbeitenden Werkstücks WS. Ein elektrisch leitfähiger Schweißzusatz, der in Form eines Schweißdrahts 130 vorliegt und auf einer Rolle 131 aufgewickelt ist, kann mittels einer Schweißdrahtfördervorrichtung 112 des Heißdrahtbrenners 110 in Richtung des Werkstücks WS und damit in Richtung des Schweißbads gefördert werden. Der Schweißdraht 130 wird in einem Führungsrohr 113 des Heißdrahtbrenners 110 geführt. Ein weiteres Kontaktrohr 114 des Heißdrahtbrenners 110 ist in elektrischem Kontakt mit dem Schweißdraht 130. Als Verbrauchsmaterial wird hier der Schweißdraht 130 nicht als Bestandteil des Heißdrahtbrenners 110 angesehen. Der Heißdrahtbrenner 110 ist an sich ein konventioneller Heißdrahtbrenner.

Das Lichtbogenschweißgerät 100 in Fig. 1a umfasst schließlich noch eine Heizvorrichtung 150. Die Heizvorrichtung 150 beinhaltet eine Wechselstromquelle 151, eine Steuerung 152 und eine Bedienkonsole 153. Die Heizvorrichtung 150 ist eingerichtet, den Schweißdraht 130 mit einem Wechselstrom I_{H} zu beaufschlagen. Dazu führt sie dem Schweißdraht 130 über das Kontaktrohr 114 den Wechselstrom I_{H} zu. Aufgrund des elektrischen Widerstands des Schweißdrahts 130 erhitzt der Wechselstrom I_{H} das freie Ende des Schweißdrahts 130 zwischen dem Kontaktrohr 114 und dem Schweißbad am Werkstück WS. Damit ist die Heizvorrichtung 150 eingerichtet, den Schweißzusatz 130 für das Lichtbogenschweißen mit dem Lichtbogenschweißgerät 100 zu erhitzen. Zusätzlich zu der Erhitzung die der Schweißdraht 130 aufgrund des Lichtbogens L bzw. des von diesem erzeugten Schweißbad erfährt, wird durch den Wechselstrom I_{H} die Abschmelzleistung erhöht, was die Produktivität bei bestimmten Schweißaufgaben steigern kann.

Die Steuerung 152 der Heizvorrichtung 150 steuert die Wechselstromquelle 151. Dazu gehört, dass sie der Wechselstromquelle 151 vorgibt, wie der Verlauf des Wechselstroms I_{H} zu parametrieren ist. Die Steuerung 152 umfasst einen Flash-Speicher und einen Mikroprozessor sowie einen RAM (nicht abgebildet). In dem Flash-Speicher ist die genaue Art und Reihenfolge der auszuführenden Steueroperationen als Programmcode hinterlegt. Zur Steuerung der Wechselstromquelle 151 wird der Programmcode in den RAM geladen und von dem Mikroprozessor ausgeführt, der daraufhin entsprechende Steuersignale zu Ansteuerung der Wechselstromquelle 151 generiert und dieser zuführt. Die Bedienkonsole 153 enthält Bedienmittel, z.B. Drehknöpfe und einen berührungsempfindlichen Bildschirm (nicht abgebildet), mittels derer einen Benutzer des Lichtbogenschweißgeräts 100 Einstellungen vornehmen kann, die von der Steuerung 152 berücksichtigt werden.

Jeder elektrische Strom verursacht ein magnetisches Feld. Das magnetische Feld kann wiederum einen anderen Strom beeinflussen, z.B. anziehen oder abstoßen. Der Strom I_{H} ist ein Wechselstrom. Wenn der mit dem Wechselstrom I_{H} beaufschlagte Schweißdraht 130 in Richtung des Schweißbads und damit in die Nähe des Lichtbogens L geführt wird, bewirkt das den Schweißdraht 130 aufgrund des ihm beaufschlagten Wechselstroms I_{H} umgebende Magnetfeld eine Anziehung bzw. Abstoßung des Lichtbogens L. Der Lichtbogen L erfährt daher im Vergleich zu einem Fall, in dem der Schweißdraht mit einem Gleichstrom beaufschlagt wird, eine pendelartige Auslenkung. In Fig. 1a wird der Lichtbogen L aufgrund des Wechselstroms I_{H} abgestoßen und nach links ausgelenkt.

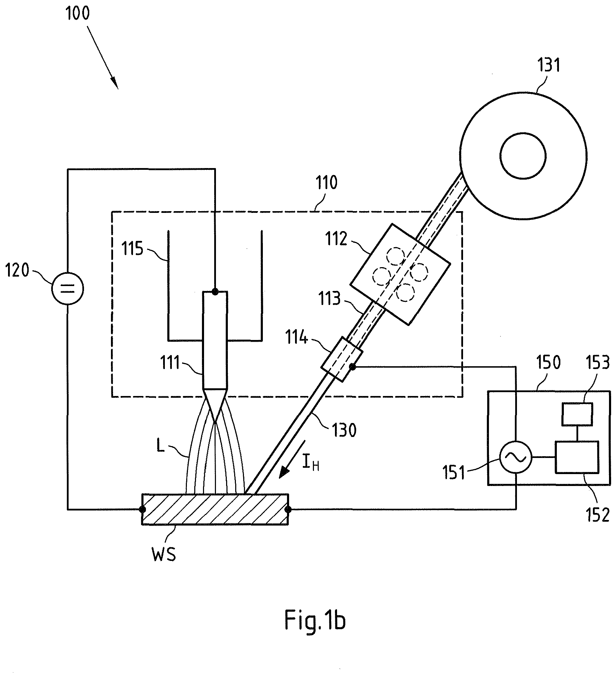

Fig. 1b zeigt eine schematische Darstellung des Lichtbogenschweißgeräts 100 aus Fig. 1a, wobei in der dargestellten Betriebssituation ein Nulllagendurchgang des dem Schweißzusatz 130 beaufschlagten Wechselstroms I_{H} erfolgt. Da der Wechselstrom I_{H} in dem gezeigten Augenblick des Schweißvorgangs gerade einen Nulllagendurchgang vollführt, somit also in dem dargestellten Moment die Stromstärke in dem Schweißdraht 130 null ist, erzeugt der Schweißdraht 130 in diesem Moment auch kein Magnetfeld. Entsprechend findet auch keine Auslenkung des Lichtbogens L statt. In diesem Moment besteht kein Unterschied zum Erhitzen des Schweißdrahts 130 mittels eines Gleichstroms.

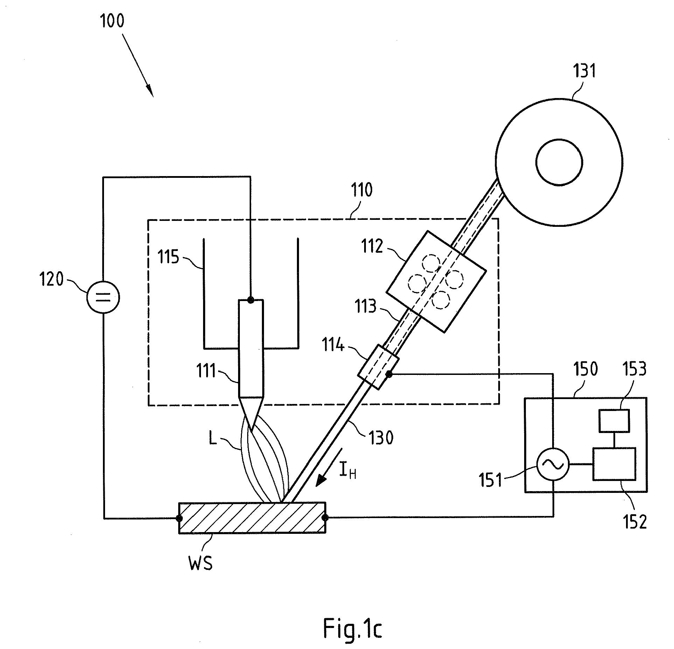

Fig. 1c zeigt eine schematische Darstellung des Lichtbogenschweißgeräts 100 aus Fig. 1a, wobei in der dargestellten Betriebssituation eine Auslenkung des Lichtbogens L in eine zweite Richtung erfolgt. In dem in Fig. 1c illustrierten Moment des Schweißprozesses ist das Vorzeichen der Stromstärke des Wechselstroms I_{H} gegenüber dem in Fig. 1a illustrierten Moment des Schweißprozesses umgekehrt. Anders ausgedrückt fließt der Wechselstroms I_{H} in die entgegengesetzte Richtung. Entsprechend kehrt sich auch gegenüber Fig. 1a das Magnetfeld des Schweißzusatzes 130 um, so dass der Lichtbogen L angezogen wird und in Richtung des Schweißzusatzes, d.h. in Fig. 1c nach rechts, ausgelenkt wird. Über eine Phase des Wechselstroms I_{H} betrachtet führt der Lichtbogen L also eine Pendelbewegung aus.

Die Auslenkung des Lichtbogens L führt dazu, dass die Energie des Lichtbogens L auf eine im Vergleich zur Beaufschlagung des Schweißdrahts 130 mit Gleichstrom größere Fläche des Werkstücks WS verteilt wird. Die Oberflächen des Schweißbads vergrößert sich also, so dass das Schweißbad bei gleicher Lichtbogenleistung flacher ist. Es kommt zu einer geringeren Aufmischung des Materials des Schweißzusatzes 130 mit dem Material des Werkstücks WS, was für verschiedene Schweißanwendungen wünschenswert ist. Bei dem Lichtbogenschweißgerät 100 werden für das Herbeiführen der Lichtbogenauslenkung keine Spulen benötig. Der ohnehin vorhandene Schweißzusatz 130 wird genutzt, um das für die pendelartige Auslenkung des Lichtbogens L nötige magnetische Wechselfeld zu erzeugen. Der Heißdrahtbrenner 110 wird so nicht zusätzlich beschwert. Gegenüber einem Brenner mit Spulen für die Lichtbogenauslenkungen können geringere Brennerabmessungen, insbesondere ein geringerer Durchmesser des Heißdrahtbrenners 110 in der Nähe des Elektrodenaustritts, realisiert werden. Aufgrund des geringeren Durchmessers, kann der Schweißzusatz 130 näher an der Wolframelektrode 111 und am Lichtbogen sowie in einem kleineren Winkel zu dem Lichtbogen L zum Schweißbad geführt werden. Es kann eine Annährung an eine Parallelität von Lichtbogen L und Schweißzusatz 130 erreicht werden. Erleichterungen beim Schweißen können die Folge sein. Sind Lichtbogen L und Schweißzusatz 130 nahe beieinander und in kleinem Winkel zueinander, ist ferner eine stärkere magnetische Beeinflussung des Lichtbogens L gegeben.

Durch die Bereitstellung der Heizvorrichtung 150 kann der konventionelle Heißdrahtbrenner 110 weiterverwendet werden, und dennoch die Möglichkeit zur pendelartigen Lichtbogenauslenkung geschaffen werden.

Beispiele von Schweißanwendungen, bei denen die Heizvorrichtung 150 bzw. das Lichtbogenschweißgerät 100 in besonders vorteilhafter Weise einsetzbar sein kann, sind das Auftragsschweißen sowie das Engspaltschweißen.

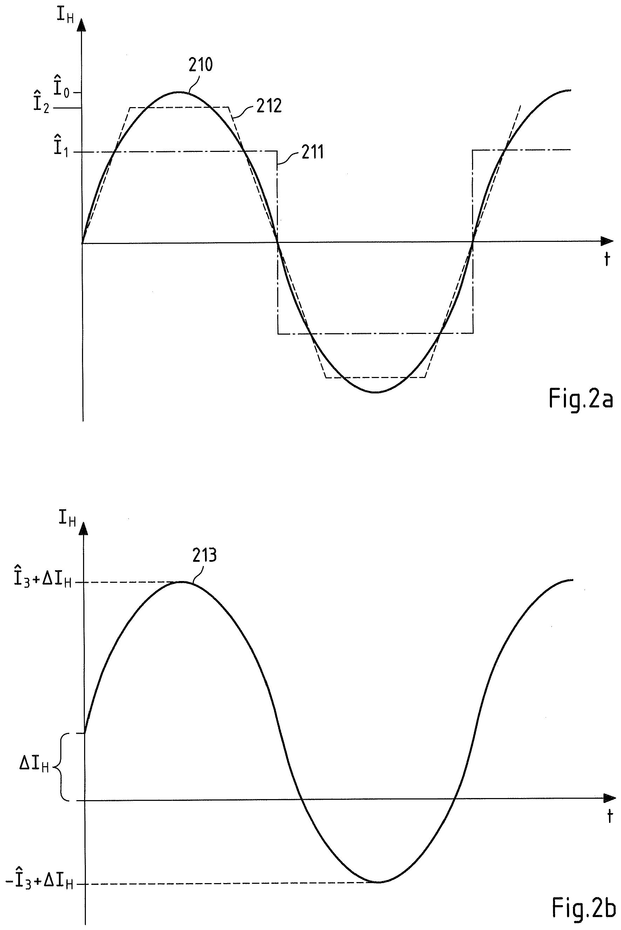

Beim Auftragsschweißen ist es ein Ziel, den gewünschten Auftrag schnell auf das jeweilige Werkstück aufzubringen, um eine hohe Produktivität zu erreichen. Es werden daher oftmals Heißdrahtdrahtschweißverfahren eingesetzt, um ein besonders schnelles Abschmelzen des Schweißzusatzes 130 zu erreichen. Hier kann in vorteilhafter Weise die Heizvorrichtung 150 eingesetzt werden. Dann können eine magnetisch bewirkte, pendelartige Auslenkung des Lichtbogens L und somit ein flacheres Schweißbad mit größerer Oberfläche und eine geringer Aufmischung des Materials des Werkstücks WS mit dem Material des Schweißzusatzes 130 erreicht werden. Die geringere Aufmischung kann dafür sorgen, dass der gewünschte Auftrag mit weniger Schweißzusatzmaterial erreicht werden kann, da sich das Schweißzusatzmaterial zu einem größeren Teil an der Werkstücksoberfläche anordnet. Bei gleicher Abschmelzleistung kann es somit zu einer erheblichen Produktivitätssteigerung kommen.
Beim Engspaltschweißen kann aufgrund des Verzichts auf am Heißdrahtbrenner 110 angeordnete Spulen zur Herbeiführung der Lichtbogenauslenkung und der damit geringeren Brennerabmessungen das Einführen des Schweißbrenners in enge Spalte einfacher sein oder überhaupt erst möglich werden. Die Vorteile der pendelartigen Lichtbogenauslenkung stehen dennoch zur Verfügung. So können beispielsweise sogar Schweißbäder auf Werkstücksoberflächen auf unterschiedlichen Seiten des Spalts ausgebildet werden, wenn sich der Lichtbogen L aufgrund des magnetischen Wechselfelds pendelartig von der einen Werkstücksoberfläche zur anderen bewegt.
Anhand der Figuren 2a bis 2d werden nachfolgend einige Beispiele von Ausgestaltungen des Wechselstroms I_{H}, mit dem der Schweißzusatz 130 beaufschlagt werden kann, im Kontext des in Fig. 1a, 1b und 1c gezeigten Lichtbogenschweißgeräts 100 erläutert.

Der Bediener des Lichtbogenschweißgeräts 100 kann über die Bedienkonsole 153 eine Art der Form des Verlaufs des Wechselstroms I_{H} einstellen. Die Umsetzung der Vorgabe erfolgt durch die Steuerung 152, indem diese entsprechend der Einstellung auf die Wechselstromquelle 151 einwirkt.

Fig. 2a zeigt eine beispielhafte Gegenüberstellung schematischer Verläufe 210, 211 und 212 des Wechselstroms I_{H}, wobei die Verläufe sich hinsichtlich der Arten ihrer Formen unterscheiden.

Verlauf 210 ist sinusförmig, Verlauf 211 ist rechteckförmig und Verlauf 212 ist trapezförmig. Trotz der Unterschiedlichkeit der Verläufe 210, 211 und 212 erfolgt bei allen drei Verläufen eine Beaufschlagung des Schweißzusatzes 130 mit derselben elektrischen Leistung. Dabei ist die Amplitude Î₀ des sinusförmigen Verlaufs 210 am größten, gefolgt von der Amplitude Î₂ des trapezförmigen Verlaufs 212 und der Amplitude Î₁ des rechteckförmigen Verlaufs 211. Damit ist die maximale Auslenkung des Lichtbogens L für den sinusförmigen Verlauf 210 am größten, gefolgt vom trapezförmigen Verlauf 212 und dem rechteckförmigen Verlauf 211. Die Frequenzen der Verläufe 210, 211 und 212 sind identisch. Die unterschiedlichen Formarten des Verlaufs können für verschiedene Schweißaufgaben unterschiedlich gut geeignet sein.

Der sinusförmiger Verlauf 210 des Wechselstroms I_{H} und die damit einhergehende, relativ weite magnetisch bedingte Auslenkung des Lichtbogens L beim Schweißen kann eine vergleichsweise große Oberfläche und geringe Tiefe des Schweißbads sowie eine vergleichsweise geringe Aufmischung des Materials des Schweißzusatzes 130 mit dem Material des Werkstücks WS zur Folge haben. Zudem ändert sich bei dem sinusförmigen Verlauf 210 die Stromstärke des Wechselstroms I_{H} - und damit die Auslenkung des Lichtbogens L - kontinuierlich, so dass ein relativ gleichmäßiges Aufschmelzen der von dem Lichtbogen L überstrichenen Werkstoffoberfläche erreicht werden kann.

Der rechteckförmige Verlauf 211 des Wechselstroms I_{H} hat bei gleicher elektrischer Leistung eine relativ geringe Amplitude Î₁. Eine entsprechend ebenfalls relativ geringe magnetisch bedingte Auslenkung des Lichtbogens L ist die Folge. Damit können eine vergleichsweise geringe Ausdehnung des Schweißbads und eine große Tiefe des Schweißbads erreicht werden, da eine Konzentrierung der Lichtbogenleistung stattfinden. Da der Wert der Stromstärke des Wechselstroms I_{H} sich bei rechteckförmigem Verlauf nur ändert, wenn ein Polaritätswechsel stattfindet, ansonsten aber konstant ist, ist auch die Auslenkung des Lichtbogens L über vergleichsweise lange Zeit konstant, so dass ein punktuelles Einwirken des Lichtbogens L auf das Werkstück WS erfolgt.

Bei dem trapezförmigen Verlauf 212 liegt die Amplitude Î₂ des Wechselstroms I_{H} zwischen der Amplitude Î₀ des sinusförmigen Verlaufs 210 und der Amplitude Î₁ des rechteckförmigen Verlaufs 211. Gleiches gilt also auch für die Auslenkung des Lichtbogens L. Anders als bei dem sinusförmigen Verlauf 210 findet keine kontinuierliche Veränderung der Stromstärke des Wechselstroms I_{H} und damit der Lichtbogenauslenkung statt. Die Stromstärke und die Lichtbogenauslenkung bleiben aber bedingt durch die geringere Flankensteilheit im Vergleich zu dem rechteckförmigen Verlauf 211 und bezogen auf die Periodendauer weniger lange gleich.

Über die Bedienkonsole 153 ist die Amplitude des Wechselstroms I_{H} durch den Bediener einstellbar. Für die Umsetzung der Vorgabe der Amplitude wird durch die Steuerung 152 gesorgt, die dazu entsprechend auf die Wechselstromquelle 151 einwirkt. Die Einstellbarkeit der Amplitude ist auf einen Bereich von 100 A bis 300 A begrenzt.

Die Amplitude des beaufschlagten Wechselstroms I_{H} bestimmt, wie weit der Lichtbogen L beim Schweißen durch die magnetische Beeinflussung zur jeweiligen Seite ausgelenkt wird. Damit wird auch bestimmt, wie groß die Oberfläche des erzeugten Schweißbads ist und es wird bei gleichbleibender Lichtbogenleistung bestimmt, wie tief bzw. flach das Schweißbad ist. Ebenso wird die Aufmischung des Schweißzusatzmaterials mit dem Werkstücksmaterial beeinflusst. Aufgrund der Einstellbarkeit der Amplitude können diese Effekte gesteuert werden.

Neben dem Material des konkret verwendeten Schweißzusatzes 130 und seinem Querschnitt bestimmt die elektrische Leistung, mit der der Schweißzusatz 130 beaufschlagt wird, maßgeblich, wie schnell und wie stark sich der Schweißzusatz 130 erwärmt. Damit ist bei vorgegebener Beschaffenheit des Schweißzusatzes 130 die ihm zugeführte elektrische Leistung von entscheidender Bedeutung für das Erhitzen und Abschmelzen des Schweißzusatzes 130 - und damit für das Schweißergebnis. Ferner existiert eine Obergrenze für die elektrische Leistung, mit der der Schweißzusatz 130 maximal beaufschlagt werden kann, wenn gute Schweißergebnisse erzielt werden sollen. Insbesondere darf die Leistung nicht so groß sein, dass es neben dem Lichtbogen L zwischen der Wolframelektrode 111 und dem Werkstück WS zu einer Zündung eines zweiten Lichtbogens zwischen dem Ende des Schweißzusatzes 130 und dem Werkstück WS kommt. Es ist daher im Interesse des Schweißers, dass die dem Schweißzusatz 130 zu beaufschlagende elektrische Leistung vorgebbar ist. Aus diesem Grund ist sie bei der Heizvorrichtung 150 über die Bedienkonsole 153 durch den Bediener einstellbar. Für die Umsetzung der Vorgabe der elektrischen Leistung wird durch die Steuerung 152 gesorgt, die dazu entsprechend auf die Wechselstromquelle 151 einwirkt.

Die Steuervorrichtung 152 - und damit die Heizvorrichtung 150 - ist eingerichtet, einen weiteren Parameter automatisch an die vorgegebene elektrische Leistung für die Beaufschlagung des Schweißzusatzes 130 anzupassen. Dazu muss über die Bedienkonsole 153 ein entsprechender Modus der Heizvorrichtung 150 gewählt werden. In diesem kann eine Unterordnung des weiteren Parameters unter die vorgegebene elektrische Leistung erreicht werden. Es kann sichergestellt werden, dass die vorgegebene elektrische Leistung in jedem Fall eingehalten wird. Es werden von der Steuerung 152 entsprechende Berechnungen durchgeführt, um festzustellen, wie der weitere Parameter unter den jeweils gegebenen Umständen anzupassen ist, damit sich die vorgegebene elektrische Leistung einstellt.

Beispielsweise kann bei vorgegebener elektrischer Leistung und bei vorgegebener Amplitude eine Anpassung der Art der Form des Verlaufs des Wechselstroms I_{H} als einem weiteren Parameter erfolgen. Wird z.B. bei der jeweils aktuellen Art der Form des Verlaufs des Wechselstroms I_{H}, z.B. bei sinusförmigem Verlauf, und bei der vorgegebenen Amplitude die vorgegebene elektrische Leistung nicht erreicht, kann die Art der Form des Verlaufs auf einen rechteckförmigen Verlauf geändert werden. Bei gleicher Amplitude bedeutet ein rechteckförmiger Verlauf des Wechselstroms I_{H} eine größere elektrische Leistung. Ist die Art der Form des Verlaufs des Wechselstroms I_{H} dagegen vom Benutzer als unveränderlich festgelegt, kann die Amplitude der weitere, von der elektrischen Leistung verschiedene Parameter sein, der automatisch angepasst wird, damit sich die vorgegebene elektrische Leistung einstellt. Es können aber beispielsweise ebenfalls sowohl die Art der Form des Verlaufs des Wechselstroms als erster Parameter als auch die Amplitude als zweiter Parameter gleichzeitig angepasst werden.

Fig. 2b zeigt ein Darstellung eines schematischen Verlaufs 213 des Wechselstroms I_{H}, wobei der Verlauf des Wechselstroms gegenüber der Nulllage versetz ist.

Der Versatz ΔI_{H} des Verlaufs 213 gegenüber der Nulllage wird herbeigeführt, indem der Bediener des Lichtbogenschweißgeräts 100 über die Bedienkonsole 153 eine entsprechende Einstellung vornimmt. Der von dem Bediener eingestellte Versatz ΔI_{H} wird bildet einen Gleichanteil der Stromstärke des Wechselstroms I_{H}. Der eingestellte Versatz ΔI_{H} wird durch die Steuerung 152 zu einem Stromstärkensollwert addiert und die Wechselstromquelle 151 entsprechend gesteuert. Es stellt sich ein gegenüber der Nulllage asymmetrischer Verlauf des Wechselstroms I_{H} ein.

In Fig. 2b ist aufgrund des Versatzes ΔI_{H} der maximale Betrag der Stromstärke des Wechselstroms I_{H} bei positivem Vorzeichen der Stromstärke gleich Î₃+ΔI_{H} und damit größer als bei negativem Vorzeichen. Entsprechend stellt sich beim Schweißen auch eine unterschiedliche maximale Auslenkung des Lichtbogens L zu unterschiedlichen Seiten ein. Die maximale Auslenkung des Lichtbogens L ist bei positivem Vorzeichen der Stromstärke des Wechselstroms I_{H} größer als bei negativem Vorzeichen. Dies kann die Lösung bestimmter Schweißaufgaben vorteilhaft sein. Zum Beispiel kann beim Schweißen an einer Kante des Werkstücks WS die sinnvolle maximale Auslenkung dadurch begrenzt sein, dass der Lichtbogen L nicht über die Kante des Werkstücks WS hinaus ausgelenkt werden soll, während zu einer entgegengesetzten Seite die gewünschte maximale Auslenkung größer ist.

Ist neben der Vorgabe des Versatzes ΔI_{H} eine dem Schweißzusatz 130 mittels des Wechselstroms I_{H} zu beaufschlagende elektrische Leistung vorgegeben und ist die Heizvorrichtung 150 eingerichtet, einen weiteren Parameter an die vorgegebene elektrische Leistung anzupassen, kann die Anpassung an die elektrischen Leistung beispielsweise dahingehend vorgenommen werden, dass die Amplitude Î₃ des Wechselstroms I_{H} angepasst wird. Zusätzlich oder alternativ kann eine Anpassung der Art der Form des Verlaufs 213 des Wechselstroms I_{H} vorgenommen werden.

Über die Bedienkonsole 153 ist die Frequenz des Wechselstroms I_{H} durch den Bediener einstellbar. Für die Umsetzung der Vorgabe der Frequenz wird durch die Steuerung 152 gesorgt, die dazu entsprechend auf die Wechselstromquelle 151 einwirkt. Die Einstellbarkeit der Frequenz ist auf einen Bereich von 20 Hz bis 1000 Hz begrenzt.

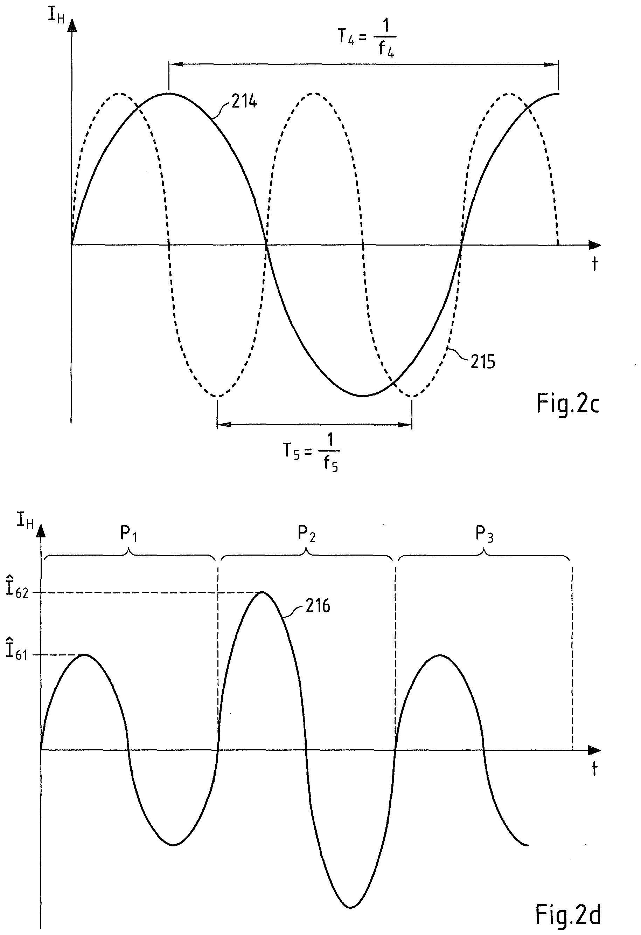

Fig. 2c zeigt eine beispielhafte Gegenüberstellung schematischer Verläufe 214 und 215 des Wechselstroms I_{H}, wobei die Verläufe sich hinsichtlich ihrer Frequenzen f₄ und f₅ unterscheiden.

Bei Verlauf 214 ist die Periodendauer T₄ größer als die Periodendauer T₅ bei Verlauf 216. Damit ist bei Verlauf 214 die Frequenz f₄ kleiner als die Frequenz f₅ bei Verlauf 215. Die Frequenz bestimmt maßgeblich, wie häufig und wie schnell sich der Wert der Stromstärke des Wechselstroms I_{H} ändert. Damit bestimmt sie ebenfalls maßgeblich, wie schnell sich die Lichtbogenauslenkung und damit die Lichtbogenposition ändern. Über die Lichtbogenposition wird bestimmt, an welcher Stelle des Werkstücks WS Energie in das Werkstück WS eingebracht wird. Über die Bedienkonsole 153 ist die Einstellbarkeit der Veränderung der Lichtbogenposition gegeben.

Fig. 2d zeigt eine Darstellung eines schematischen Verlaufs 216 des Wechselstroms I_{H}, wobei die elektrische Leistung des Wechselstroms I_{H} variiert.

Über die Bedienkonsole 153 kann ein Bediener des Lichtbogenschweißgeräts 100 einstellen, dass die elektrische Leistung des Wechselstroms I_{H} variieren soll. Für die Umsetzung dieser Vorgabe wird durch die Steuerung 152 gesorgt, die dazu entsprechend auf die Wechselstromquelle 151 einwirkt.

In Fig. 2d sind die Perioden P1 und P₂ des Verlaufs 216 des Wechselstroms I_{H} ganz und die Periode P₃ zu einem Großteil dargestellt. Der Verlauf 216 setzt über den hier gezeigten Ausschnitt entsprechend fort. In Periode P₁ ist die Amplitude Î₆₁ des Wechselstroms I_{H} kleiner als in die Amplitude Î₆₂ in Periode P₂, während die Amplitude in Periode P₃ wieder bei Î₆₁ liegt. Aufgrund der größeren Amplitude Î₆₂ ist die elektrische Leistung des Wechselstroms I_{H} in Periode P₂ größer als in den Perioden P₁ und P₃. Die elektrische Leistung des Wechselstroms I_{H} variiert. Sie ist gepulst. In Periode P₂ wird durch die größere Amplitude Î₆₂ eine größere Oberfläche des Schweißbads erreicht, während durch die kleinere Amplitude Î₆₁ in den Perioden P₁ und P₃ eine Konzentration der Lichtbogenleistung auf den inneren Bereich des Schweißbads erreicht wird. Es kann ein Schweißbad gebildet werden, dessen Tiefe im Innenbereich größer als im Außenbereich ist.

Ist neben der Vorgabe, im Verlauf eines Schweißprozesses die elektrische Leistung für die Beaufschlagung des Schweißzusatzes 130 zu variieren, eine dem Schweißzusatz mittels des Wechselstroms I_{H} zu beaufschlagende elektrische Leistung vorgegeben und ist die Heizvorrichtung eingerichtet, eine weiteren Parameter an die vorgegebene elektrische Leistung anzupassen, kann die Anpassung beispielsweise dahingehend vorgenommen werden, dass im Mittel über die unterschiedlich gestalteten Perioden P₁, P₂ und P₃ des Wechselstroms I_{H} die vorgegebene elektrische Leistung erreicht wird. Dazu kann beispielsweise eine bzw. die Amplituden Î₆₁, Î₆₂ des Wechselstroms I_{H} angepasst werden.

Mischformen der in den Figuren 2a bis 2d gezeigten Verläufe des Wechselstroms I_{H} sind möglich.

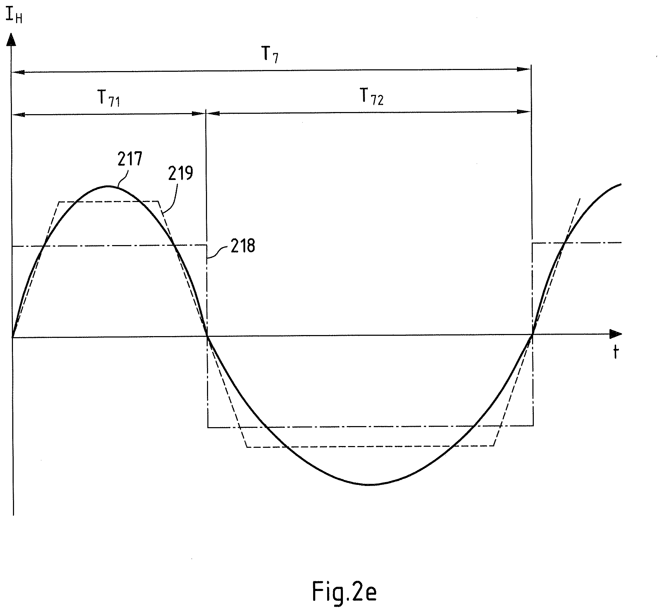

Fig. 2e zeigt schematische Verläufe 217, 218, 219 des Wechselstroms I_{H}, wobei die Verläufe sich hinsichtlich der Arten ihrer Formen unterscheiden und wobei sich jeweils in einer Periode des Wechselstroms I_{H} die Dauer des Zeitraums, in dem der Wechselstrom I_{H} ein positives Vorzeichen besitzt, von der Dauer des Zeitraums, in dem der Wechselstrom I_{H} ein negatives Vorzeichen besitzt, unterscheidet.

Alle drei Verläufe 217, 218 und 219 in Fig. 2e haben dieselbe Periodendauer T₇. Jeder der Verläufe 217, 218, 219 setzt sich aus einer positiven Halbwelle, in der die Stromstärke des Wechselstroms I_{H} positiv ist, und einer negativen Halbwelle, in der die Stromstärke des Wechselstroms I_{H} negativ ist, zusammen. Die positive Halbwelle dauert für den Zeitraum T₇₁. und die negative Halbwelle für den Zeitraum T₇₂ an.

Die Richtung der Lichtbogenauslenkung ist abhängig vom Vorzeichen des Wechselstroms I_{H}, d.h. vom Vorzeichen seiner Stromstärke. Der Zeitraum T₇₁, in dem für die Verläufe 217, 218 und 219 der Wechselstrom I_{H} ein positives Vorzeichen besitzt, ist kürzer als der Zeitraum T₇₂, in dem er ein negatives Vorzeichen besitzt. Der Lichtbogen L wird also länger zu der Seite des Werkstücks WS ausgelenkt, zu der er bei negativem Vorzeichen des Wechselstroms I_{H} ausgelenkt wird. Auf der einen Seite des Werkstücks WS ist der Energieeintrag durch den Lichtbogen L damit größer als auf der anderen. Bezogen auf die Position der Schweißelektrode 111 erfolgt eine asymmetrische Schweißung.

Über die Bedienkonsole 153 ist die jeweilige Dauer der Zeiträume T₇₁ und T₇₂ durch den Bediener einstellbar. Für die Umsetzung der Vorgabe des Bedieners wird durch die Steuerung 152 gesorgt, die dazu entsprechend auf die Wechselstromquelle 151 einwirkt.

Ist neben der Vorgabe der Dauer der Zeiträume T₇₁ und T₇₂ eine dem Schweißzusatz 130 mittels des Wechselstroms I_{H} zu beaufschlagende elektrische Leistung vorgegeben und ist die Heizvorrichtung 150 eingerichtet, einen weiteren Parameter an die vorgegebene elektrische Leistung anzupassen, kann die Anpassung an die elektrischen Leistung beispielsweise dahingehend vorgenommen werden, dass die Amplitude des Wechselstroms I_{H} angepasst wird. Zusätzlich oder alternativ kann eine Anpassung der Art der Form des Verlaufs des Wechselstroms I_{H} vorgenommen werden.

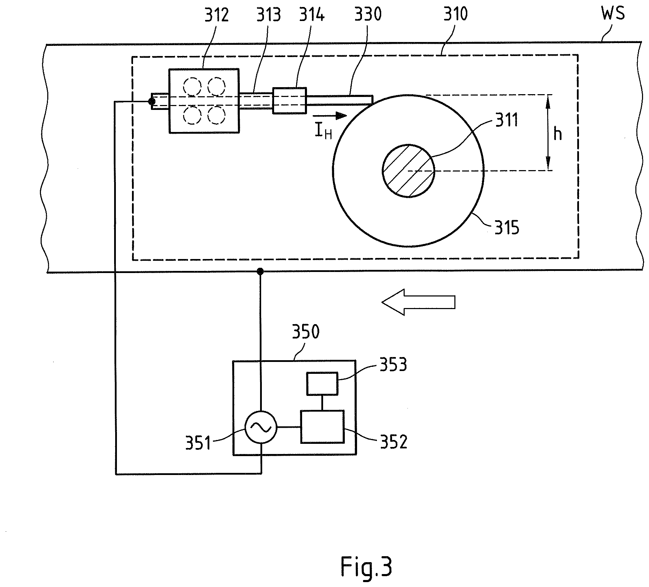

Fig. 3 zeigt eine schematische Darstellung eines Heißdrahtbrenners 310 im Einsatz beim Schweißen eines Werkstücks WS in einer Draufsicht auf ein Werkstück WS.

Der Heißdrahtbrenner 310 umfasst eine Wolframelektrode 311 und ein Kontaktrohr 315 zur Kontaktierung der Wolframelektrode 311. Der Heißdrahtbrenner 310 umfasst ferner eine Schweißdrahtfördervorrichtung 312, ein Führungsrohr 313, in dem der Schweißzusatz 330 geführt ist, und ein Kontaktrohr 314. Der Schweißzusatz 330 liegt abermals in Form eines Schweißdrahts vor. Dem Heißdrahtbrenner 310 ist eine Heizvorrichtung 350 zugeordnet, mittels derer der Schweißdraht 330 mit Wechselstrom I_{H} beaufschlagt werden kann. Die Heizvorrichtung 350 umfasst eine Wechselstromquelle 351, eine Steuerung 352 und eine Bedienkonsole 353.

Der Heißdrahtbrenner 310 und die Heizvorrichtung 350 funktionieren prinzipiell genauso wie der Heißdrahtbrenner 110 und die Heizvorrichtung 150 aus Fig. 1a bis Fig. 1c. Detaillierte Erläuterung hierzu werden daher an dieser Stelle vermieden. Der Fokus liegt auf der Führung des Schweißdrahts 330.

Die Schweißrichtung ist in Fig. 3 durch einen Pfeil markiert. Sie ergibt sich entweder durch manuelle Führung des Heißdrahtbrenners 310 durch einen Schweißer oder durch Führung des Heißdrahtbrenners 310 durch einen Schweißroboter. In Fig. 3 verläuft die Wolframelektrode 311 senkrecht zur Bildebene. Der Schweißdraht 330 ist in der Bildebene - und somit senkrecht zur Erstreckungsrichtung der Wolframelektrode 311 und auch senkrecht zur Schweißrichtung - um den Versatz h gegenüber der Wolframelektrode 311 versetzt in dem Führungsrohr 313 geführt.

Aufgrund des Versatzes h erfolgt beim Schweißen eine weitere Auslenkung des Lichtbogens in Richtung des Versatzes h, als dies ohne den Versatz h der Fall wäre. In entgegengesetzter Richtung, d.h. in Fig. 3 in Richtung der unteren Kante des Werkstücks WS, macht sich der Einfluss des Wechselstroms I_{H} auf den Lichtbogen weniger stark bemerkbar. Es kommt also zu einem asymmetrischen Pendeln des Lichtbogens. Wird z.B. eine Schweißnaht in Schweißrichtung erzeugt, kann durch das asymmetrische Pendeln in Richtung des Versatzes h und senkrecht zum Schweißnahtverlauf die Werkstückflanke erreicht werden, während in der entgegengesetzten Richtung eine weniger starke Auslenkung auftritt. Dies kann erreicht werden, ohne dass der Verlauf des Wechselstroms I_{H} gegenüber der Nulllage versetzt sein müsste.

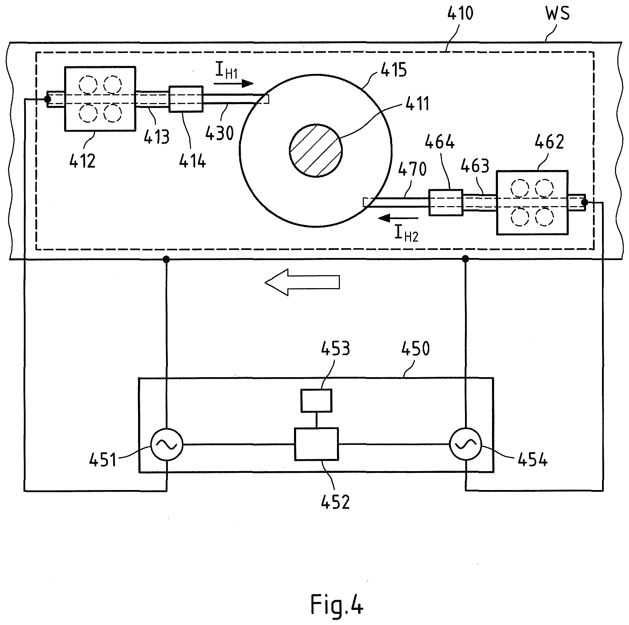

Fig. 4 zeigt eine schematische Darstellung eines ersten Ausführungsbeispiels eines erfindungsgemäßen Schweißbrenners, nämlich des Heißdrahtbrenners 410 im Einsatz beim Schweißen eines Werkstücks WS in einer Draufsicht auf das Werkstück WS.

Der Heißdrahtbrenner 410 umfasst eine Wolframelektrode 411 und ein Kontaktrohr 415 zur Kontaktierung der Wolframelektrode 411. Ferner umfasst der Heißdrahtbrenner 410 eine erste Schweißdrahtfördervorrichtung 412, ein erstes Führungsrohr 413, in dem ein erster Schweißdraht 430 geführt ist, und ein erstes Kontaktrohr 414. Weiterhin sind eine zweite Schweißdrahtfördervorrichtung 462, ein zweites Führungsrohr 463, in dem ein zweiter Schweißdraht 470 geführt ist, und ein zweites Kontaktrohr 464 Bestandteile des Heißdrahtbrenners 410. Als Verbrauchsmaterial werden hier der erster Schweißdraht 430 und der zweite Schweißdraht 470 nicht als Bestandteile des Heißdrahtbrenners 410 angesehen.

Zu den obigen Komponenten werden hier keine detaillierten Erläuterungen gegeben, da sie prinzipiell wie die entsprechenden Komponenten aus Fig. 1a bis 1c und Fig. 3 aufgebaut sind. Der Fokus liegt auf der Anordnung der Führungsrohre 413 und 463 zueinander und auf dem Aufbau der dem Heißdrahtbrenner 410 zugeordneten Heizvorrichtung 450.

Die Heizvorrichtung umfasst wie auch die Heizvorrichtungen 150 und 350 eine Steuerung 452 und eine Bedienkonsole 453. Im Unterschied zu den Heizvorrichtungen 150 und 350 sind allerdings zwei Wechselstromquellen 451 und 454 von der Heizvorrichtung 450 umfasst und werden von der Steuerung 452 gesteuert. Mittels der ersten Wechselstromquelle 451 ist der erste Schweißdraht 430 mit einem ersten Wechselstrom I_{H1} beaufschlagbar und mittels der zweiten Wechselstromquelle 454 ist der zweite Schweißdraht 470 mit einem zweiten Wechselstrom I_{H2} beaufschlagbar. Im Vergleich zu der Steuerung 152 aus Fig. 1a bis Fig. 1c weist die Steuerung 452 unter anderem einen zusätzlichen Steuerausgang auf. Außerdem ist in einem Speicher der Steuereinrichtung 452 ein anderer Programmcode hinterlegt als im Speicher der Steuerung 152. So wird erreicht, dass die Steuerung 452 sowohl die Wechselstromquelle 451 als auch die Wechselstromquelle 454 ansteuern kann. Ein Bediener kann über die Bedienkonsole 453 eine Phasenunterschied zwischen dem ersten Wechselstrom I_{H1} und dem zweiten Wechselstrom I_{H2} einstellen, und so die Phasen des ersten Wechselstroms I_{H1} und des zweiten Wechselstroms I_{H2} aufeinander abstimmen. Die Umsetzung der Vorgabe erfolgt durch die Steuerung 452, indem diese entsprechend der Einstellung auf die Wechselstromquellen 452 und 452 einwirkt. Alternativ kann auch die Steuerung 452 automatisch, d.h. ohne Benutzerzutun, die Abstimmung vornehmen.

Senkrecht zur Erstreckungsrichtung der Wolframelektrode 411 sind in Fig. 4 die Führungsrohre 413 und 463 horizontal und vertikal zueinander versetzt, d.h. in zwei zueinander senkrechten Richtungen zueinander versetzt, angeordnet. Sie sind außerdem sowohl in horizontaler als auch in vertikaler Richtung auf unterschiedlichen Seiten der Wolframelektrode 411 angeordnet. In den Führungsrohren 413 und 463 sind der erste Schweißdraht 430 und der zweite Schweißdraht 470 senkrecht zur Erstreckungsrichtung der Wolframelektrode 411 und senkrecht zu der in Fig. 4 durch den Pfeil markierten Schweißrichtung gegenüber der Wolframelektrode 411 versetzt geführt.

Durch den horizontalen und vertikalen Versatz der Führungsrohre 413 und 463 zueinander kann bei Beaufschlagung des ersten Schweißdrahts 430 mit dem ersten Wechselstrom I_{H1} und bei Beaufschlagung des zweiten Schweißdrahts 470 mit dem zweiten Wechselstrom I_{H2} eine Auslenkung des Lichtbogens in zwei zueinander senkrechte Richtungen erfolgen. Eine gezielte, zweidimensionale Auslenkung des Lichtbogens ist durchführbar. Aufgrund der Anordnung der Führungsrohre 413 und 463 auf unterschiedlichen Seiten der Wolframelektrode 411 sowohl in horizontaler als auch in vertikaler Richtung kann zu beiden Schweißdrähten 430, 470 hin eine weite Auslenkung des Lichtbogens erreicht werden, wobei das Pendeln des Lichtbogens gegenüber der Wolframelektrode 411 symmetrisch erfolgen kann. Der Lichtbogen kann daher ggf. sogar gegenüberliegende Flanken des Werkstücks WS erreichen.

Durch Abstimmen der Phasen des ersten Wechselstroms I_{H1} und des zweiten Wechselstroms I_{H2} automatisch oder über die Bedienkonsole 453, kann festgelegt werden, wie die relative Auslenkung des Lichtbogens durch den ersten Wechselstrom I_{H1} bezogen auf den die Auslenkung durch den zweiten Wechselstrom I_{H2} erfolgen soll. Beispielsweise kann die Abstimmung so vorgenommen werden, dass beim Schweißen eine Auslenkung des Lichtbogens entlang einer Kreisbahn erfolgt, indem bei sinusförmigen Wechselströmen gleicher Amplitude und gleicher Frequenz ein Phasenunterschied von 90° vorgegeben wird. Beim Schweißen rotiert dann der Lichtbogen.

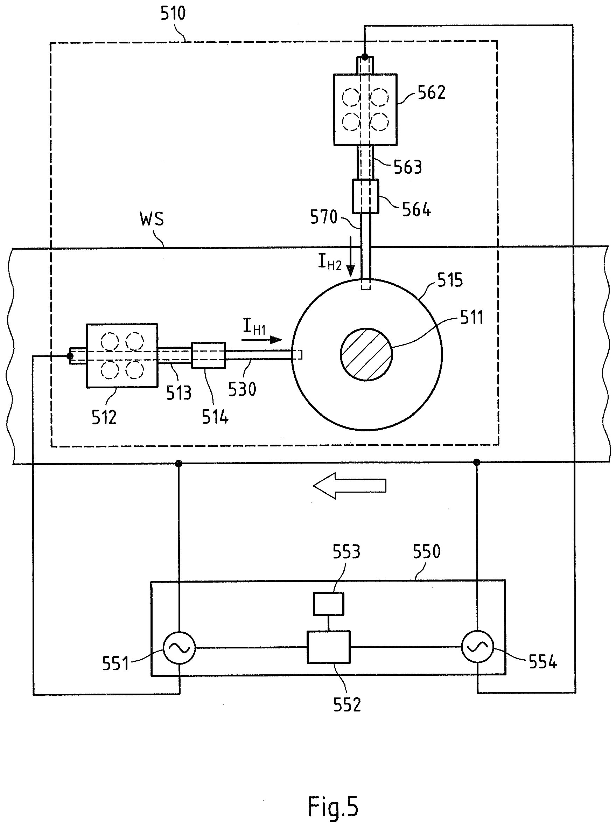

Fig. 5 zeigt eine schematische Darstellung eines zweiten Ausführungsbeispiels eines erfindungsgemäßen Schweißbrenners, nämlich des Heißdrahtbrenners 510 im Einsatz beim Schweißen eines Werkstücks WS in einer Draufsicht auf das Werkstück WS.

Der Aufbau des Heißdrahtbrenners 510 gleicht zu einem großen Teil dem des Heißdrahtbrenners 410 aus Fig. 4. Daher wird hier nur auf Unterschiede zu dem Aufbau aus Fig. 4 eingegangen. Wie der Heißdrahtbrenners 410 umfasst auch der Heißdrahtbrenners 510 ein erstes Führungsrohr 513 und ein zweites Führungsrohr 563. Die Führungsrohre 513 und 563 sind zudem in Fig. 5 ebenfalls senkrecht zu Erstreckungsrichtung der Wolframelektrode 511 horizontal und vertikal versetzt zueinander angeordnet. Die Führungsrohre 513 und 563 des Heißdrahtbrenners 510 in Fig. 5 schließen jedoch im Unterschied zu den Führungsrohren 413 und 463 des Heißdrahtbrenners 410 aus Fig. 4 einen rechten Winkel ein.

## Patentansprüche

1. Schweißbrenner (410, 510), der eine erste Schweißzusatzzuführung (413, 513) für einen ersten Schweißzusatz (430, 530) und eine zweite Schweißzusatzzuführung (463, 563) für einen zweiten Schweißzusatz (470, 570) und eine Schweißelektrode (411, 511) umfasst, wobei der erste Schweißzusatz (430, 530) durch eine dem Schweißbrenner (410, 510) zugeordnete Heizvorrichtung (450, 550) mit einem ersten Wechselstrom (I_{H1}) beaufschlagbar ist und wobei der zweite Schweißzusatz (470, 570) durch eine dem Schweißbrenner (410, 510) zugeordnete Heizvorrichtung (450, 550) mit einem zweiten Wechselstrom (I_{H2}) beaufschlagbar ist,
**dadurch gekennzeichnet, dass**
die erste Schweißzusatzzuführung (413, 513) und die zweite Schweißzusatzzuführung (463, 563) in zwei zueinander senkrechten Richtungen, die wiederum beide senkrecht zu einer Haupterstreckungsrichtung der Schweißelektrode (411, 511) sind, versetzt zueinander angeordnet sind.

2. Schweißbrenner (410, 510), nach Anspruch 1, wobei die erste Schweißzusatzzuführung (413, 513) und die zweite Schweißzusatzzuführung (463, 563) in beiden der zwei zueinander senkrechten Richtungen auf unterschiedlichen Seiten der Schweißelektrode(411, 511) angeordnet sind.

3. Schweißbrenner (410, 510), nach Anspruch 1, wobei die erste Schweißzusatzzuführung (413, 513) und die zweite Schweißzusatzzuführung (463, 563) einen rechten Winkel einschließen.

4. Schweißbrenner (410, 510), nach einem der vorherigen Ansprüche, wobei eine Phase des ersten Wechselstroms (I_{H1}) und eine Phase des zweiten Wechselstroms (I_{H2}) aufeinander abstimmbar sind.

5. Schweißbrenner (410, 510) nach einem der vorherigen Ansprüche, wobei eine dem ersten Schweißzusatz (430, 530) mittels des ersten Wechselstrom (I_{H1}) zu beaufschlagende elektrische Leistung vorgebbar ist und/oder eine dem zweiten Schweißzusatz (470, 570) mittels des zweiten Wechselstrom (I_{H2}) zu beaufschlagende elektrische Leistung vorgebbar ist.

6. Schweißbrenner (410, 510) nach Anspruch 5, wobei die Heizvorrichtung (450, 550) eingerichtet ist, einen weiteren Parameter an eine vorgegebene elektrische Leistung für die Beaufschlagung des ersten Schweißzusatzes (430, 530) anzupassen.

7. Schweißbrenner (410, 510) nach einem der vorherigen Ansprüche, wobei eine Amplitude (Î₀, Î₁, Î₂, Î₃, Î₆₁, Î₆₂) des ersten Wechselstroms (I_{H1}) vorgebbar ist.

8. Schweißbrenner (410, 510) nach einem der vorherigen Ansprüche, wobei die Art einer Form des Verlaufs (210, 211, 212, 213, 214, 215, 216, 217, 218, 219) des ersten Wechselstroms (I_{H1}) vorgebbar ist.

9. Schweißbrenner (410, 510) nach einem der vorherigen Ansprüche, wobei der erste Wechselstroms (I_{H1}) einen sinusförmigen Verlauf (210, 213, 214, 215, 216, 217), einen rechteckförmigen Verlauf (211, 218), oder einen trapezförmigen Verlauf (212, 219) aufweist.

10. Schweißbrenner (410, 510) nach einem der vorherigen Ansprüche, wobei vorgebbar ist, dass der Verlauf (213) des ersten Wechselstroms (I_{H1}) gegenüber einer Nulllage versetzt ist.

11. Schweißbrenner (410, 510) nach einem der vorherigen Ansprüche, wobei eine Frequenz (f₄, f₅) des ersten Wechselstroms (I_{H1}) vorgebbar ist.

12. Schweißbrenner (410, 510) nach einem der vorherigen Ansprüche, wobei die Heizvorrichtung (450, 550) eingerichtet ist, im Verlauf eines Schweißprozesses die elektrische Leistung für die Beaufschlagung des ersten Schweißzusatzes (430, 530) zu variieren.

13. Schweißbrenner (410, 510) nach einem der vorherigen Ansprüche, wobei sich in einer Periode des ersten Wechselstroms (I_{H1}) die Dauer des Zeitraums (T₇₁), in dem der erste Wechselstrom (I_{H1}) ein positives Vorzeichen besitzt, von der Dauer des Zeitraums (T₇₂), in dem der erste Wechselstrom (I_{H1}) ein negatives Vorzeichen besitzt, unterscheidet.

14. Lichtbogenschweißgerät (100) mit einem Schweißbrenner (410, 510) nach einem der Ansprüche 1 bis 13.

15. Verfahren umfassend das Lichtbogenschweißen mit einem Schweißbrenner (410, 510) nach einem der Ansprüche 1 bis 13 oder mit einem Lichtbogenschweißgerät (100) nach Anspruch 14.

16. Verwendung eines Schweißbrenners (410, 510) nach einem der Ansprüche 11 bis 13 oder eines Lichtbogenschweißgeräts (100) nach Anspruch 14 für das Auftragsschweißen oder das Engspaltschweißen.

## Claims

1. A welding torch (410, 510) which comprises a first weld-filler supply means (413, 513) for a first weld filler (430, 530) and a second weld-filler supply means (463, 563) for a second weld filler (470, 570) and a welding electrode (411, 511),
wherein a first alternating current (I_{H1}) can be applied to the first weld filler (430, 530) by means of a heating device (450, 550) associated with the welding torch (410, 510) and wherein a second alternating current (I_{H2}) can be applied to the second weld filler (470, 570) by means of a heating device (450, 550) associated with the welding torch (410,510),
**characterised in that**
the first weld-filler supply means (413, 513) and the second weld-filler supply means (463, 563) are arranged offset from one another in two mutually perpendicular directions, which are in turn both perpendicular to a main direction of extension of the welding electrode (411, 511).

2. A welding torch (410, 510) according to claim 1, wherein the first weld-filler supply means (413, 513) and the second weld-filler supply means (463, 563) are arranged on different sides of the welding electrode (411, 511) in both of the two mutually perpendicular directions.

3. A welding torch (410, 510) according to claim 1, wherein the first weld-filler supply means (413, 513) and the second weld-filler supply means (463, 563) enclose a right angle.

4. A welding torch (410, 510) according to one of the preceding claims, wherein a phase of the first alternating current (I_{H1}) and a phase of the second alternating current (I_{H2}) can be tuned with respect to one another.

5. A welding torch (410, 510) according to one of the preceding claims, wherein an electrical power for being applied to the first weld filler (430, 530) by means of the first alternating current (I_{H1}) can be predefined and/or an electrical power for being applied to the second weld filler (470, 570) by means of the second alternating current (I_{H2}) can be predefined.

6. A welding torch (410, 510) according to claim 5, wherein the heating device (450, 550) is designed to adapt a further parameter to a predefined electrical power for being applied to the first weld filler (430, 530).

7. A welding torch (410, 510) according to one of the preceding claims, wherein an amplitude (Î₀, Î₁, Î₂, Î₃, Î₆₁, Î₆₂) of the first alternating current (I_{H1}) can be predefined.

8. A welding torch (410, 510) according to one of the preceding claims, wherein the kind of the shape of the curve (210, 211, 212, 213, 214, 215, 216, 217, 218, 219) of the first alternating current (I_{H1}) can be preselected.

9. A welding torch (410, 510) according to one of the preceding claims, wherein the first alternating current (I_{H1}) has a sinusoidal curve (210, 213, 214, 215, 216, 217), a rectangular curve (211, 218) or a trapezoidal curve (212, 219).

10. A welding torch (410, 510) according to one of the preceding claims, wherein the curve (213) of the first alternating current (I_{H1}) can be predefined to be offset with respect to a zero position.

11. A welding torch (410, 510) according to one of the preceding claims, wherein a frequency (f₄, f₅) of the first alternating current (I_{H1}) can be predefined.

12. A welding torch (410, 510) according to one of the preceding claims, wherein the heating device (450, 550) is configured to vary the electrical power to be applied to the first weld filler (430, 530) in the course of a welding process.

13. A welding torch (410, 510) according to one of the preceding claims, wherein, in a period of the first alternating current (I_{H1}), the length of time (T₇₁) during which the first alternating current (I_{H1}) has a positive sign differs from the length of time (T₇₂) during which the first alternating current (I_{H1}) has a negative sign.

14. An arc welding device (100) having a welding torch (410, 510) according to one of claims 1 to 13.

15. A process comprising arc welding by means of a welding torch (410, 510) according to one of claims 1 to 13 or an arc welding device (100) according to claim 14.

16. The use of a welding torch (410, 510) according to one of claims 11 to 13 or an arc welding device (100) according to claim 14 for build-up welding or narrow-gap welding.

## Revendications

1. Torche de soudage (410, 510) qui comporte un premier approvisionnement en consommable de soudage (413, 513) pour un premier consommable de soudage (430, 530) et un deuxième approvisionnement en consommable de soudage (463, 563) pour un deuxième consommable de soudage (470, 570) et une électrode de soudage (411, 511), auquel cas le premier consommable de soudage (430, 530) est susceptible de pouvoir être soumis à un premier courant alternatif (I_{H1}) par un dispositif chauffant (450, 550) affecté à la torche de soudage (410, 510) et auquel cas le deuxième consommable de soudage (470, 570) est susceptible de pouvoir être soumis à un deuxième courant alternatif (I_{H2}) par un dispositif chauffant (450, 550) affecté à la torche de soudage (410, 510),
**caractérisée en ce que**
le premier approvisionnement en consommable de soudage (413, 513) et le deuxième approvisionnement en consommable de soudage (463, 563) sont agencés décalés l'un par rapport à l'autre dans deux directions mutuellement perpendiculaires, lesquelles sont à leur tour perpendiculaires par rapport à une direction d'extension principale de l'électrode de soudage (411, 511).

2. Torche de soudage (410, 510) selon la revendication 1, auquel cas le premier approvisionnement en consommable de soudage (413, 513) et le deuxième approvisionnement en consommable de soudage (463, 563) sont agencés dans l'ensemble des deux directions mutuellement perpendiculaires sur des côtés différents de l'électrode de soudage (411, 511).

3. Torche de soudage (410, 510) selon la revendication 1, auquel cas le premier approvisionnement en consommable de soudage (413, 513) et le deuxième approvisionnement en consommable de soudage (463, 563) forment un angle droit.

4. Torche de soudage (410, 510) selon l'une des revendications précédentes, auquel cas une phase du premier courant alternatif (I_{H1}) et une phase du deuxième courant alternatif (I_{H2}) sont accordables l'un par rapport à l'autre.

5. Torche de soudage (410, 510) selon l'une des revendications précédentes, auquel cas une puissance électrique à appliquer au premier consommable de soudage (430,530) au moyen du premier courant alternatif (I_{H1}) est susceptible de pouvoir être prédéfinie, et/ou une puissance électrique à appliquer au second consommable de soudage (470,570) au moyen du second courant alternatif (I_{H2}) est susceptible de pouvoir être prédéfinie.

6. Torche de soudage (410, 510) selon la revendication 5, auquel cas le dispositif chauffant (450, 550) est mis en place afin d'adapter un autre paramètre à une puissance électrique prédéfinie pour la sollicitation du premier consommable de soudage (430, 530).

7. Torche de soudage (410, 510) selon l'une des revendications précédentes, auquel cas une amplitude (Î₀, Î₁, Î₂, Î₃, Î₆₁, Î₆₂) du premier courant alternatif (I_{H1}) est susceptible de pouvoir être prédéfinie.

8. Torche de soudage (410, 510) selon l'une des revendications précédentes, auquel cas le type de forme du trajet (210, 211, 212, 213, 214, 215, 216, 217, 218, 219) du premier courant alternatif (I_{H1}) est susceptible de pouvoir être prédéfini.

9. Torche de soudage (410, 510) selon l'une des revendications précédentes, auquel cas le premier courant alternatif (I_{H1}) présente un cours sinueux (210, 213, 214, 215, 216, 217), un cours rectangulaire (211, 218), ou un cours trapézoïdal (122, 219).

10. Torche de soudage (410, 510) selon l'une des revendications précédentes, auquel cas il peut être prédéfini que le cours (213) du premier courant alternatif (I_{H1}) est décalé par rapport à une position zéro.

11. Torche de soudage (410, 510) selon l'une des revendications précédentes, auquel cas une fréquence (f₄, f₅) du premier courant alternatif (I_{H1}) est susceptible de pouvoir être prédéfinie.

12. Torche de soudage (410, 510) selon l'une des revendications précédentes, auquel cas le dispositif chauffant (450, 550) est mis en place afin de faire fluctuer la puissance électrique pour la sollicitation du premier consommable de soudage (430, 530) au cours du processus de soudage.

13. Torche de soudage (410, 510) selon l'une des revendications précédentes, auquel cas, dans une période du premier courant alternatif (I_{H1}), la durée du laps de temps (T₇₁) dans lequel le premier courant alternatif (I_{H1}) a un signe positif se différencie de la durée du laps de temps (T₇₂) dans lequel le premier courant alternatif (I_{H1}) a un signe négatif.

14. Appareil de soudage à l'arc (100) avec une torche de soudage (410, 510) selon l'une des revendications 1 à 13.

15. Processus comportant l'appareil de soudage à l'arc (100) avec une torche de soudage (410, 510) selon l'une des revendications 1 à 13 ou avec un appareil de soudage à l'arc (100) selon la revendication 14.

16. Utilisation d'une torche de soudage (410, 510) selon l'une des revendications 11 à 13 ou d'un appareil de soudage à l'arc (100) selon la revendication 14 pour le rechargement par soudage ou le soudage à fente étroite.
